(19) Europäisches Patentamt
European Patent Office
Office européen des brevets

(11) Publication number: 0 397 153 B1

(12) # EUROPEAN PATENT SPECIFICATION

(45) Date of publication of patent specification: **02.08.95 Bulletin 95/31**

(51) Int. Cl.[6]: **G02F 1/1337,** C08G 73/10

(21) Application number: **90108755.1**

(22) Date of filing: **09.05.90**

(54) **Chiral smectic liquid crystal device.**

(30) Priority: **11.05.89 JP 119605/89**
**11.05.89 JP 119606/89**
**11.05.89 JP 119607/89**
**11.05.89 JP 119608/89**
**11.05.89 JP 119609/89**
**11.05.89 JP 119610/89**
**11.05.89 JP 119611/89**
**11.05.89 JP 119612/89**
**17.04.90 JP 100769/90**

(43) Date of publication of application: **14.11.90 Bulletin 90/46**

(45) Publication of the grant of the patent: **02.08.95 Bulletin 95/31**

(84) Designated Contracting States: **AT BE CH DE DK ES FR GB GR IT LI LU NL SE**

(56) References cited:
**EP-A- 0 231 781**
**GB-A- 2 174 399**

(73) Proprietor: **CANON KABUSHIKI KAISHA**
**30-2, 3-chome, Shimomaruko,**
**Ohta-ku**
**Tokyo (JP)**

(72) Inventor: **Hanyu, Yukio, c/o CANON K. K.**
**3-30-2, Shimomaruko,**
**Ohta-ku**
**Tokyo (JP)**
Inventor: **Asaoka, Masanobu, c/o CANON K. K.**
**3-30-2, Shimomaruko,**
**Ohta-ku**
**Tokyo (JP)**

(74) Representative: **Bühling, Gerhard, Dipl.-Chem. et al**
**Patentanwaltsbüro**
**Tiedtke-Bühling-Kinne & Partner**
**Bavariaring 4**
**D-80336 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

FIELD OF THE INVENTION AND RELATED ART

This invention relates to a liquid crystal device to be used in a liquid crystal display device or a liquid crystal-optical shutter, etc., particularly a liquid crystal device by use of a ferroelectric liquid crystal, more particularly to a liquid crystal device improved in display characteristics thruogh improvement in initial alignment of the liquid crystal molecules.

A display device of the type which controls transmission of light in combination with a polarizing device by utilizing the refractive index anisotropy of ferroelectric liquid crystal molecules has been proposed by Clark and Lagerwall (Japanese Laid-Open Patent Application No. 107216/1981, U.S. Patent 4,367,924). The ferroelectric liquid crystal has generally chiral smectic C phase (SmC*) of H phase (SmH*) of a non-helical structure and, under this state, shows a property of taking either one of a first optically stable state and a second optically stable state responding to an electrical field applied and maintaining such state in the absence of an electrical field, namely bistability, and also has a rapid response to the change in electrical field. Thus, it is expected to be utilized in a high speed and memory type display device and particularly to provide a large-area, high-resolution display.

For an optical modulating device by use of a liquid crystal having such bistability to exhibit desirable driving characteristics, it is required that the liquid crystal arranged between a pair of substrates should be in such a molecular alignment state that conversion between the above two stable states may occur effectively irrespective of the application of an electrical field.

Further, in a liquid crystal device utilizing birefringence of a liquid crystal, the transmittance under right angle cross nicols is given by the following equation:

$$I/I_0 = \sin^2 4\theta \cdot \sin^2(\Delta nd/\lambda)\pi,$$

wherein

$I_0$: incident light intensity,
I: transmitted light intensity,
$\theta$: tilt angle,
$\Delta n$: refractive index anisotropy,
d: thickness of the liquid crystal layer,
$\lambda$: wavelength of the incident light.

The tilt angle $\theta$ in the above-mentioned non-helical structure is recognized as a half of an angle between the average molecular axis directions of liquid crystal molecules in a twisted alignment in a first orientation state and a second orientation state. According to the above equation, it is shown that a tilt angle $\theta$ of 22.5 degrees provides a maximum transmittance and the tilt angle in a non-helical structure for realizing bistability should desirably be as close as possible to 22.5 degrees.

A method for aligning a ferroelectric liquid crystal should desirably be such that molecular layers each composed of a plurality of molecules of a smectic liquid crystal are aligned uniaxially along their normals, and it is desirable to accomplish such an alignment state by a rubbing treatment which requires only a simple production step.

As an alignment method for a ferroelectric liquid crystal, particularly a chiral smectic liquid crystal in a non-helical structure, one disclosed in U.S. Patent No. 4,561,726 has been known for example.

However, when a conventional alignment method, particularly one using a polyimide film treated by rubbing, is applied for alignment of a ferroelectric liquid crystal in a non-helical structure exhibiting bistability reported by Clark and Lagerwall, the following problems are encountered.

That is, according to our experiments, it has been found that a tile angle $\theta$ (an angle shown in Figure 3 as described below) in a ferroelectric liquid crystal with a non-helical structure obtained by alignment with an alignment control film of the prior art has become smaller as compared with a tilt angle Ⓗ (the angle Ⓗ is a half of the apex angle of the cone shown in Figure 2 as described below) in the ferroelectric liquid crystal having a helical structure. Particularly, the tilt angle $\theta$ in a ferroelectric liquid crystal with a non-helical structure obtained by alignment with alignment control films of the prior art was found to be generally on the order of 3 - 8 degrees, and the transmittance at that time was at most about 3 to 5 %.

Thus, according to Clark and Lagerwall, the tilt angle in a ferroelectric liquid crystal with a non-helical structure realizing bistability should have the same angle as the tilt angle in the ferroelectric liquid crystal having a helical structure, but in fact the tilt angle $\theta$ in a non-helical structure is smaller than the tilt angle Ⓗ in a helical structure. More specifically, it has been found that the tilt angle $\theta$ in a non-helical structure becomes smaller than the tilt angle Ⓗ because of a twist alignment of liquid crystal molecules in the non-helical structure. Thus, in a ferroelectric liquid crystal having a non-helical structure, liquid crystal molecules are aligned

with a twist from a molecular axis adjacent to an upper substrate to a molecular axis adjacent to a lower substrate continuously at a certain twist angle. This leads to a phenomenon that the tilt angle $\theta$ in the non-helical structure is smaller than the tilt angle $\Theta$ in the helical structure.

Further, in an alignment state of a chiral smectic liquid crystal attained by a conventional polyimide alignment film subjected to a rubbing treatment, when a liquid crystal is supplied with a voltage of one polarity for switching from a first optically stable state (e.g., a white display state) to a second optically stable state (e.g., a black display state) and then the voltage of one polarity is removed, the ferroelectric liquid crystal layer is supplied with a reverse electric field Vrev due to the presence of the polyimide film as an insulating layer between the electrode and the liquid crystal layer, and the reverse electric field Vrev has caused an after-image during display. The generation of the above-mentioned reverse electric field has been reported in "Switching characteristic of SSFLC" by Akio Yoshida, "Preprint for Liquid Crystal Forum, October 1987" p.p. 142 - 143.

The GB-A-2 174 399 discloses an oriented polyimide film which may be used for, inter alia, liquid crystal displays. As a tetra carboxylic acid originated moiety, 2,2-bis(3,4)-dicarboxyphenyl)hexafluoropropane dianhydride is mentioned as an example. However, this document is merely concerned about providing a colorless transparent polyimide shaped article.

## SUMMARY OF THE INVENTION

Accordingly, an object of the present invention is to provide a ferroelectric liquid crystal device having solved the above-mentioned problems, particularly a ferroelectric liquid crystal device which provides a large tilt angle of a chiral smectic liquid crystal in a non-helical structure and provides a display capable of displaying a high-contrast image and yet free from after-image.

According to a principal aspect of the present invention, there is provided a liquid crystal device, comprising: a pair of substrates and a chiral smectic liquid crystal arranged in a plurality of molecular layers each comprising a plurality of liquid crystal molecules disposed between the substrates; at least one of said substrates having thereon an alignment film comprising a polyimide which has a fluorine-containing substituent in its carboxylic acid-originated moiety, wherein said polyimide film has been subjected to a uniaxial alignment treatment; said molecular layers of the chiral smectic liquid crystal being inclined with respect to both substrates and bent between the substrates.

The fluorine-containing polyimide may preferably be selected from those having structural units represented by the following formulas (I) - (VIII):

(I)

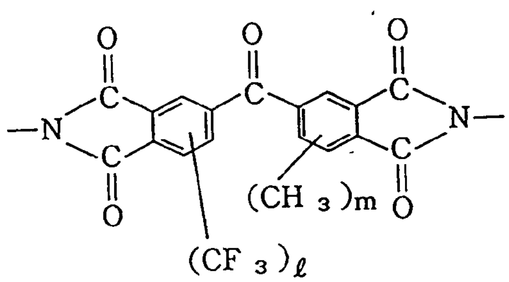

,

wherein l is an integer of 1 - 3 and m is 0 or an integer of 1 - 3;

(II)

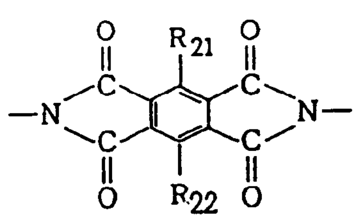

,

wherein $R_{21}$ and $R_{22}$ are respectively hydrogen atom, fluorine atom or $CH_3$ with proviso that at least one of $R_{21}$ and $R_{22}$ is fluorine atom or $-CF_3$;

(III)

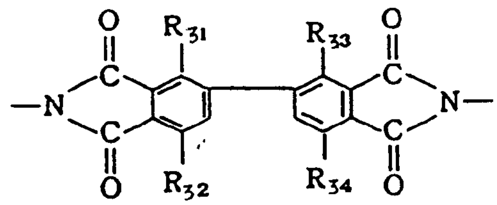

,

wherein $R_{31}$, $R_{32}$, $R_{33}$ and $R_{34}$ are respectively hydrogen atom, fluorine atom or $-CF_3$ with proviso that at least one of $R_{31}$, $R_{32}$, $R_{33}$ and $R_{34}$ is fluorine atom or $-CF_3$;

(IV)

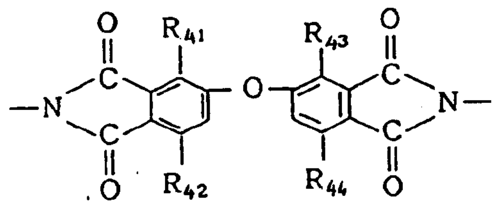

,

wherein $R_{41}$, $R_{42}$, $R_{43}$ and $R_{44}$ are respectively hydrogen atom, fluorine atom or $-CF_3$ with proviso that at least one of $R_{41}$, $R_{42}$, $R_{43}$ and $R_{44}$ is fluorine atom or $-CF_3$;

(V)

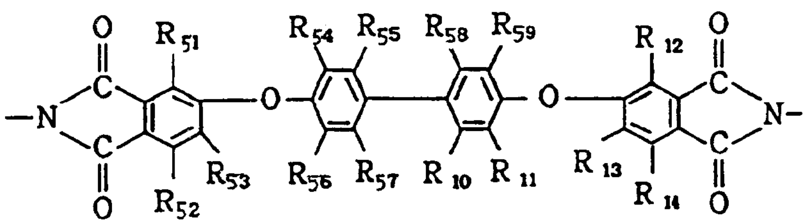

wherein $R_1$ - $R_{59}$ and $R_{10}$ - $R_{14}$ are respectively hydrogen atom, fluorine atom or $-CF_3$ with proviso that at least one of $R_{51}$ - $R_{59}$ and $R_{10}$ - $R_{14}$ is fluorine atom or $-CF_3$;

(VI)

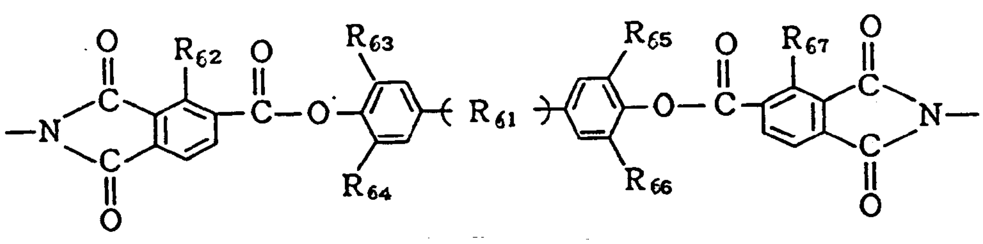

wherein

$R_{61}$ is 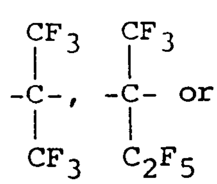 or $-(CH_2)_{n1}-$,

$n_1$ is 0 or an integer of 1 - 7; $R_{62}$ and $R_{67}$ are respectively hydrogen atom or $-CF_3$, $R_{63}$ - $R_{66}$ are respectively hydrogen atom, alkyl group, halogen atom or $-CF_3$ with proviso that at least one of $R_{62}$ - $R_{67}$ is $-CF_3$ when n1 = 0;

(VII)

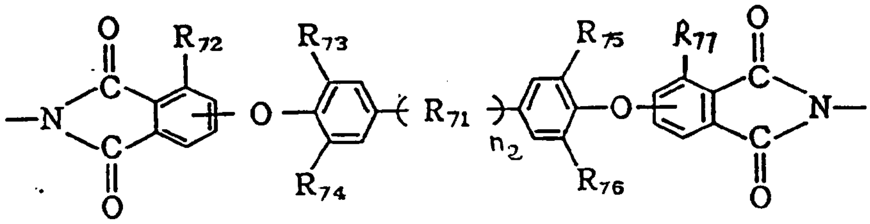

wherein

$R_{71}$ is

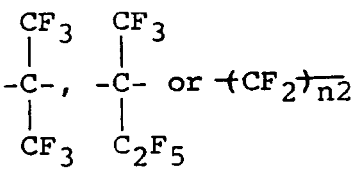

$n_2$ is 0 or an integer of 1 - 7, $R_{72}$ and $R_{77}$ are respectively hydrogen atom or $-CF_3$, $R_{73}$ - $R_{76}$ are respectively hydrogen atom, alkyl group, halogen atom or $-CF_3$ with proviso that at least one of $R_{72}$ - $R_{76}$ is $-CF_3$ when $n_1$ = 0; and

(VIII)

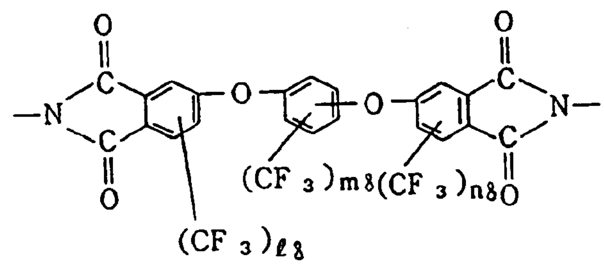

wherein l8, m8 and n8 are respectively 0 or an integer of 1- 3 with proviso that l8 + m8 + n8 ≧ 1.

These and other objects, features and advantages of the present invention will become more apparent upon a consideration of the following description of the preferred embodiments of the present invention taken in conjunction with the accompanying drawings.

## BRIEF DESCRIPTION OF THE DRAWINGS

Figure 1A is a schematic sectional view of an embodiment of the liquid crystal device according to the present invention and Figure 1B is a schematic plan view illustrating rubbing axes provided to a pair of substrates.

Figure 2 is a perspective view showing schematically an alignment of a chiral smectic liquid crystal having a helical structure. Figure 3 is a perspective view showing schematically an alignment state of a chiral smectic liquid crystal having a non-helical structure.

Figure 4A is a schematic sectional view showing an alignment state of a chiral smectic liquid crystal aligned according to the present invention; Figure 4B is an illustration of C-director alignments in its uniform alignment state; and Figure 4C is an illustration of C-director alignments in a splay alignment state.

Figures 5A and 5B are plan views illustrating tilt angles θ in a uniform alignment state and a splay alignment state, respectively.

Figure 6 is a sectional view showing a charge distribution, a direction of a spontaneous polarization $P_S$ and a direction of a reverse electric field Vrev.

Figure 7 is a schematic plan view illustrating changes in tilt angle θ during and after application of an electric field.

Figures 8 and 9 are graphs showing optical response characteristics according to a conventional device and the present invention, respectively.

Figure 10 is a waveform diagram illustrating driving waveforms used in an embodiment of the present invention.

## DETAILED DESCRIPTION OF THE INVENTION

Figure 1A is a schematic sectional view of an embodiment of the liquid crystal device according to the present invention.

The liquid crystal device comprises a pair of substrates (glass plates) 11a and 11b which are coated with transparent electrodes 12a and 12b of $In_2O_3$, ITO (indium tin oxide), etc. 20 - 100 nm (200 - 1000 Å)-thick insulating films 13a of $SiO_2$, $TiO_2$, $Ta_2O_5$, etc., and 5 - 100 nm (50 - 1000 Å)-thick alignment control films 14a and 14b of the above-mentioned fluorine-containing polyimide.

In this instance, the alignment control films 14a and 14b have been treated by rubbing in directions which are parallel to each other and in the same direction (indicated by arrows A in Figure 1A). A chiral smectic liquid crystal 15 is disposed between the substrates 11a and 11b, and the spacing between the substrates 11a and 11b is set to provide the liquid crystal layer 15 with a thickness (e.g., 0.1 - 3 microns) which is sufficiently small to suppress the formation of a helical structure of the chiral smectic liquid crystal 15 by disposing spacer beads 16 of, e.g., silica, alumina, etc. between the substrates 11a and 11b, whereby the chiral smectic liquid crystal 15 assumes a bistable alignment state.

According to our experiments, by using an alignment method using a specific polyimide alignment film treated by rubbing as explained with reference to Examples described hereinafter, there has been realized an alignment state which provides a large optical contrast between a bright and a dark state, particularly with respect to non-selected pixels during multiplexing drive as disclosed in U.S. Patent No. 4,655,561, etc., and also is free from a delay in optical response leading to a problem of after-image in a display at the time of switching during such multiplexing drive.

The fluorine-containing polyimide film used in the present invention may be obtained by synthesizing a polyamide acid through condensation reaction between a carboxylic acid anhydride and a diamine and subjecting the polyamide acid to cyclization under heating.

Examples of carboxylic acid anhydrides suitably used for providing the polyimides having a structural unit represented by the above-mentioned general formulae (I) -(VIII) may include the following:

For polyimides of the formula (I):

I-(1): 5,5′-bis(trifluoromethyl)-3,3′-4,4′-tetracarboxybenzophenone

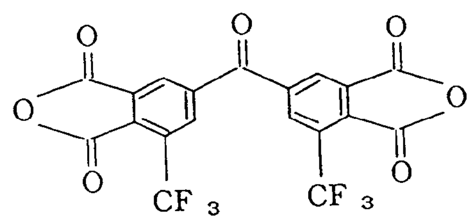

I-(2): 2,2′,5,5′-tetra(trifluoromethyl)-3,3′-,4,4′-tetracarboxybenzophenone

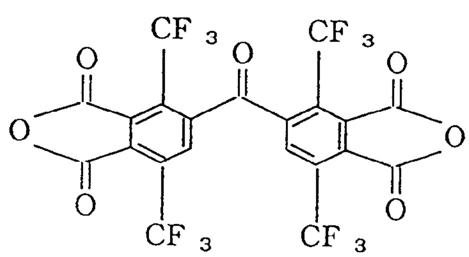

For polyimides of the formula (II):

II- (1): trifluoromethyl-pyromellitic anhydride

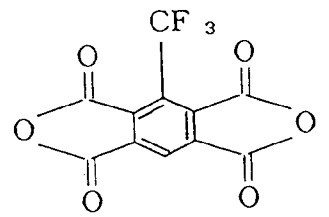

II-(2): bis(trifluoromethyl)pyromellitic anhydride

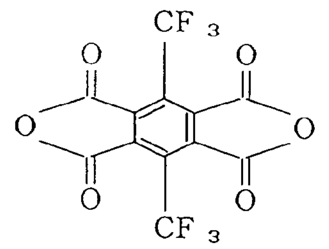

II-(3): fluoropyromellitic anhydride

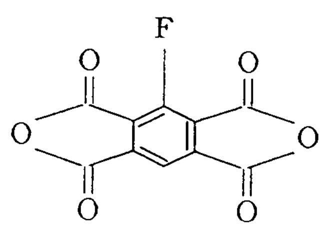

For polyimides of the formula (III):

III-(1): 5,5′-bis(trifluoromethyl)-3,3′,4,4′-tetracarboxybiphenyl anhydride

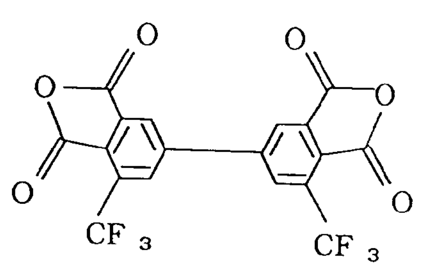

III-(2): 2,2′-,5,5′-tetrakis(trifluoromethyl)-3,3′,4,4′-tetracarboxybiphenyl anhydride

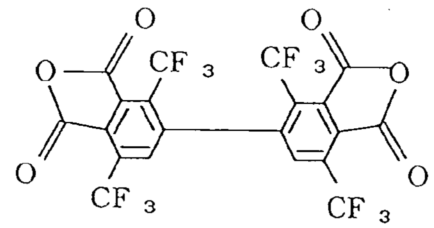

III-(3): 5,5′-difluoro-3,3′,4,4′-tetracarboxybiphenyl anhydride

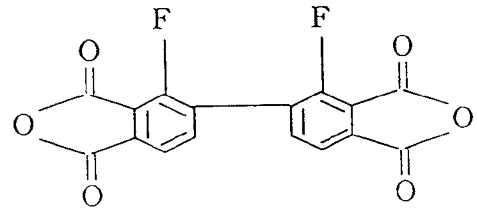

For polyimides of the formula (IV):

IV-(1): 5,5′-bis(trifluoromethyl)-3,3′,4,4′ tetracarboxydiphenyl ether anhydride

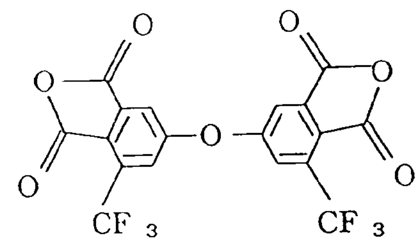

IV-(2): 2,2′,5,5′-tetra(trifluoromethyl)-3,3′,4,4′-tetracarboxydiphenyl ether anhydride

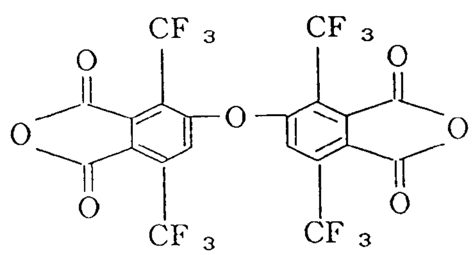

IV-(3): 2,2′-bis(fluoromethyl)-3,3′4,4′-tetracarboxydiphenyl ether anhydride

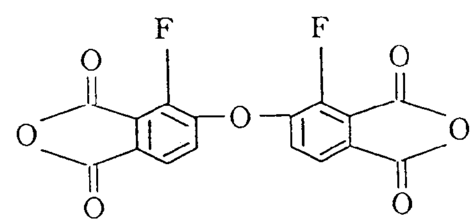

IV-(4): 5,5′-bis(trifluoromethyl)-2,2′,3,3′-tetracarboxydiphenyl ether anhydride

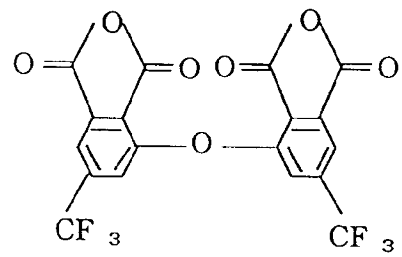

For polyimides of the formula (V):

V-(1): bis(dicarboxyphenoxy)-bis(trifluoromethyl)biphenyl

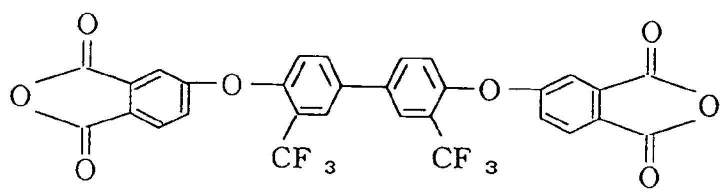

V-(2): bis(dicarboxyphenoxy)-tetrakis(trifluoromethyl)biphenyl

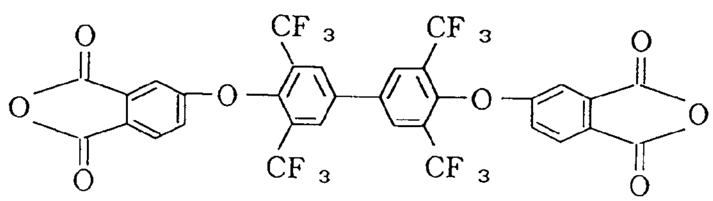

V-(3): bis[(trifluoromethyl)dicarboxyphenoxy]biphenyl

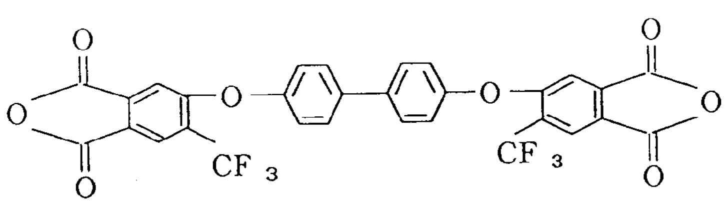

V-(4): bis[(fluoro)dicarboxyphenoxy]biphenyl

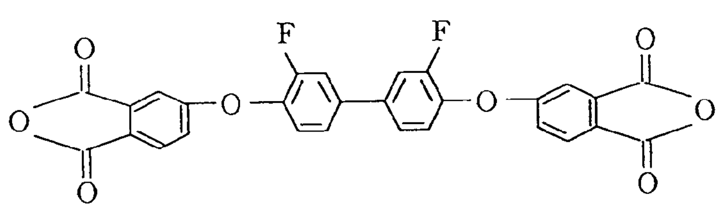

For polyimides of the formula (VI):

VI-(1): 2,2-bis[4-(3,4-dicarboxybenzoyloxy)-3-bromophenyl]hexafluoropropane anhydride

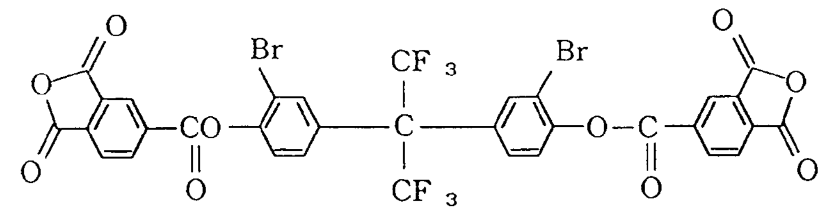

VI-(2): 2,2-bis[4-(3,4-dicarboxybenzoyloxy)-3,5-dibromophenyl]hexafluoropropane anhydride

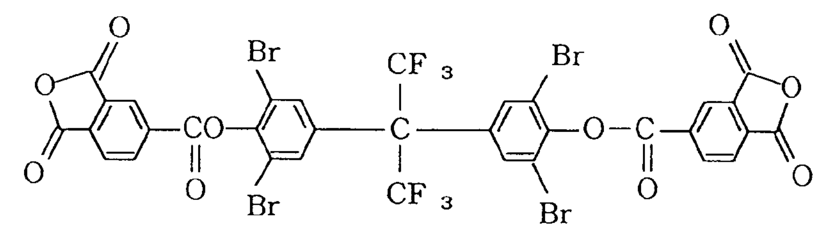

VI-(3): 2,2-bis[4-(3,4-dicarboxybenzoyloxy)-3,5-dimethylphenyl]hexafluoropropane anhydride

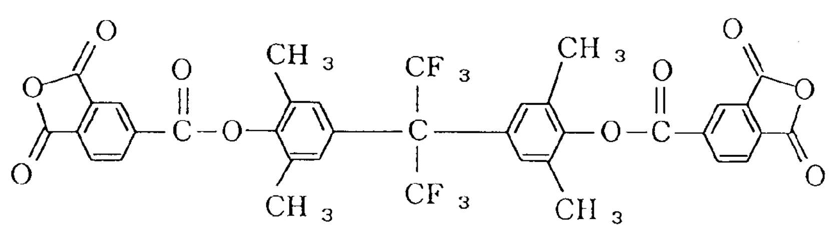

VI-(4): 2,2-bis[4-(3,4-dicarboxybenzoyloxy)phenyl]octafluorobutane anhydride

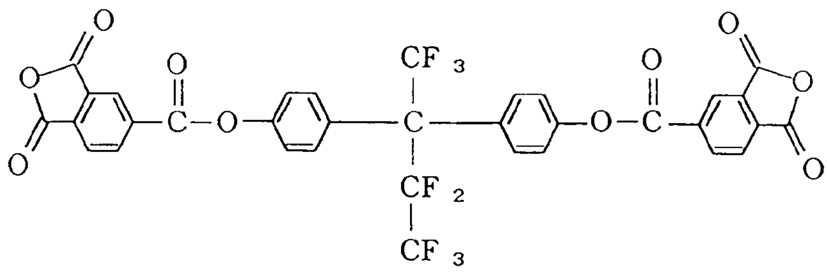

VI-(5): 2,2-bis[4-(2-trifluoromethyl-3,4-dicarboxybenzoyloxy)phenyl]hexafluoropropane anhydride

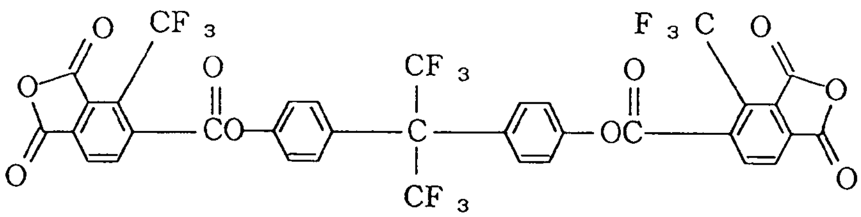

VI-(6): 1,3-bis[4-(3,4-dicarboxybenzoyloxy)phenyl]hexafluoropropane anhydride

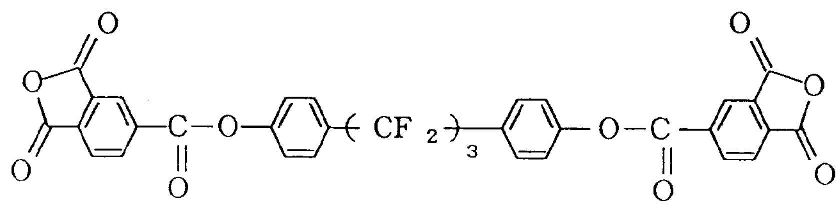

VI-(7): 1,5-bis[4-(3,4-dicarboxybenzoyloxy)phenyl]decafluoropentane anhydride

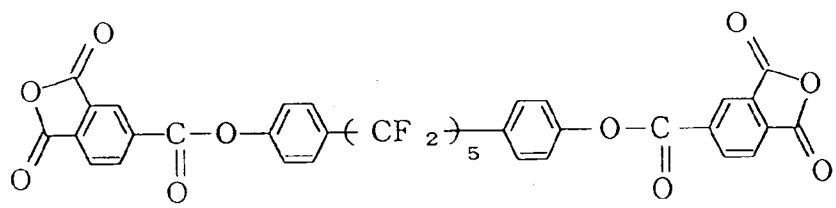

VI-(8): 1,6-bis[4-(3,4-dicarboxybenzoyloxy)phenyl]dodecafluorohexane anhydride

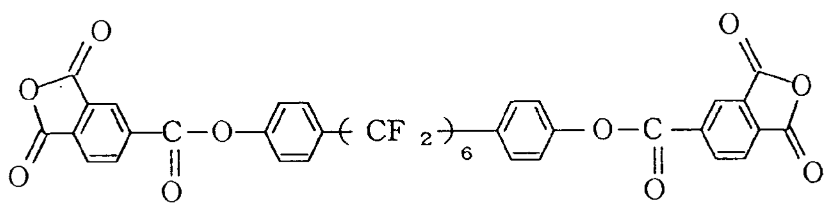

VI-(9): 1,7-bis[4-(3,4-dicarboxybenzyloxy)phenyl]tetradecafluoroheptane anhydride

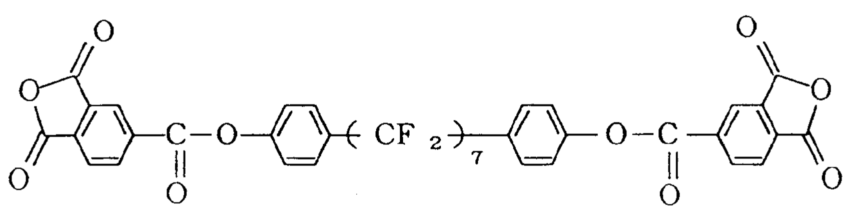

VI-(10): 1,5-bis[4-(3,4-dicarboxybenzoyloxy)-3,5-dibromophenyl]decafluoropentane anhydride

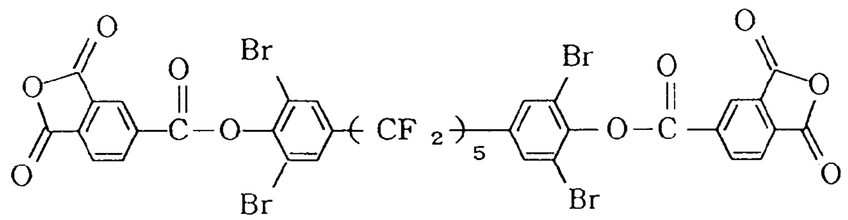

VI-(11): 1,5-bis[4-(3,4-dicarboxybenzoyloxy)-3,5-bistrifluoromethylphenyl]decafluoropentane anhydride

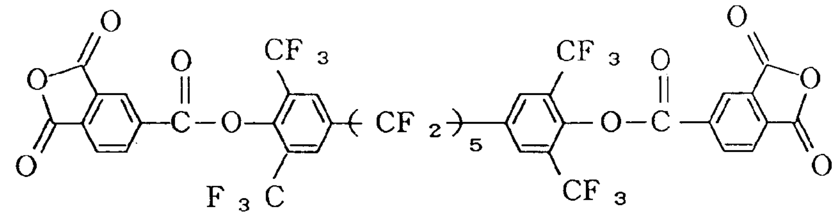

VI-(12): 1,5-bis[4-(2-trifluoromethyl-3,5-dicarboxybenzoyloxyphenyl]decafluoropentane anhydride

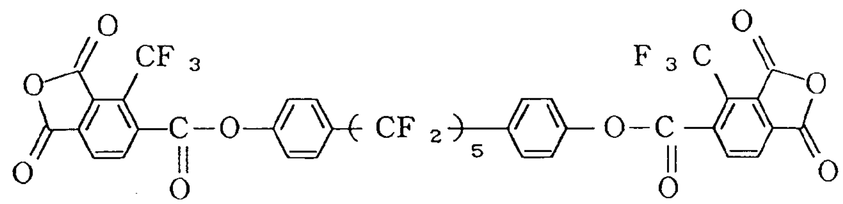

For polyamides of the formula (VII)

VII-(1): 1,5-bis[4-(3,4-dicarboxyphenoxy)phenyl]decafluoropentane anhydride

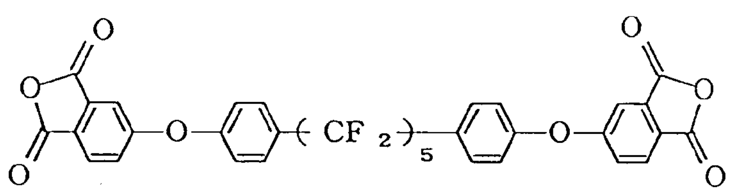

VII-(2): 1,6-bis[4-(3,4-dicarboxyphenoxy)phenyl]dodecafluorohexane anhydride

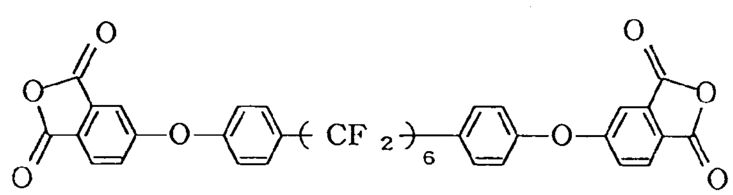

VII-(3): 1,7-bis[4-(3,4-dicarboxyphenoxy)phenyl]tetradecafloroheptane anhydride

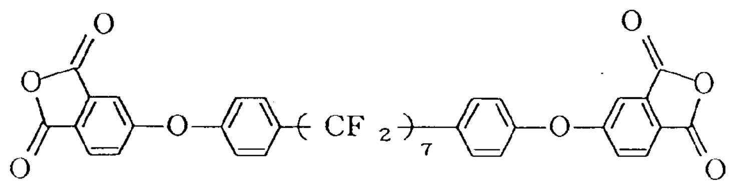

VII-(4): 1,5-bis[4-(3,4-dicarboxyphenoxy)-3,5-dibromophenyl]decafluoropentane anhydride

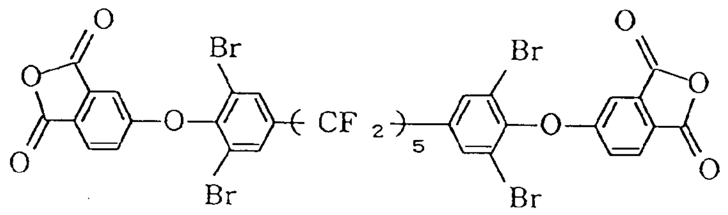

VII-(5): 1,5-bis[4-(3,4-dicarboxyphenoxy)-3,5-bistrifluoromethylphenyl]decafluoropentane anhydride

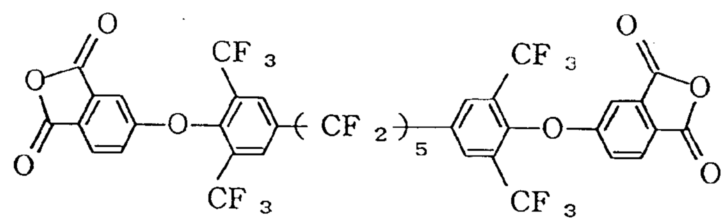

VII-(6): 1,5-bis[4-(3,4-dicarboxy-2-trifluoromethylphenoxy)phenyl]decafluoropentane anhydride

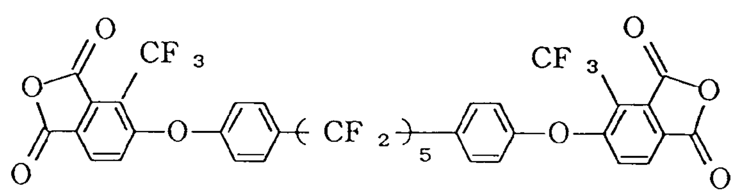

VII-(7): 2,2-bis[4-(3,4-dicarboxyphenoxy)-3-bromophenyl]hexafluoropropane anhydride

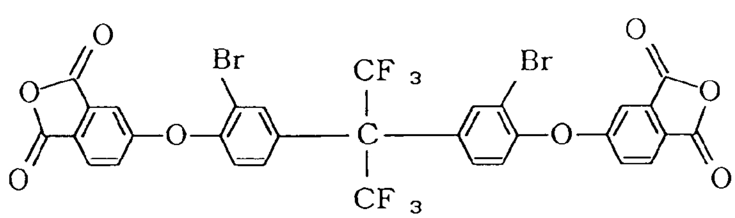

VII-(8): 2,2-bis[4-(3,4-dicarboxyphenoxy)-3,5-dibromophenyl]hexafluoropropane anhydride

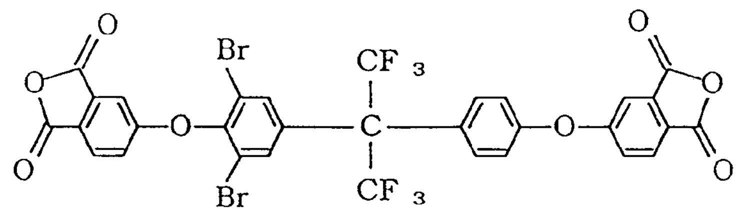

VII-(9): 2,2-bis[4-(3,4-dicarboxyphenoxy)-3,5-dimethylphenyl]hexafluoropropane anhydride

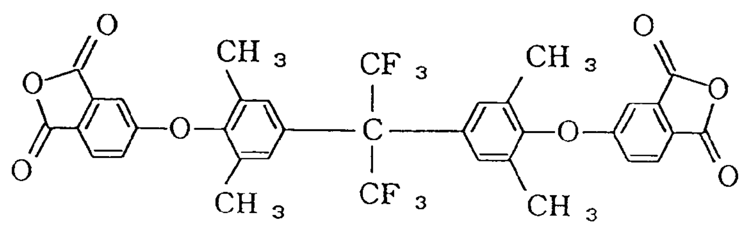

VII-(10): 2,2-bis[4-(3,4-dicarboxyphenoxy)phenyl]octafluorobutane anhydride

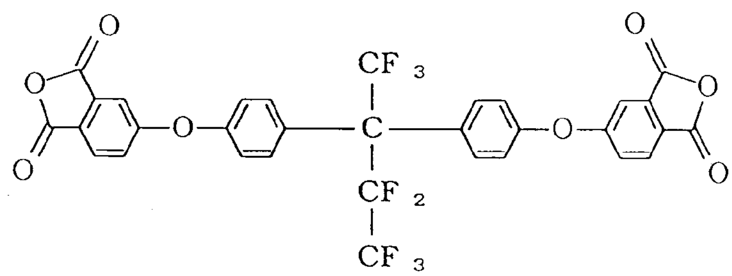

VII-(11): 2,2-bis[4-(3,4-dicarboxy-2-trifluoromethylphenoxy)phenyl]hexafluoropropane anhydride

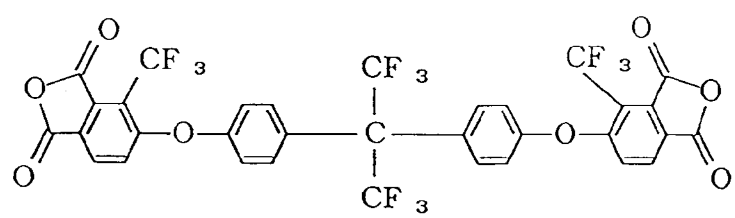

VII-(12): 1,3-bis[4-(3,4-dicarboxyphenoxy)phenyl]hexafluoropropane anhydride

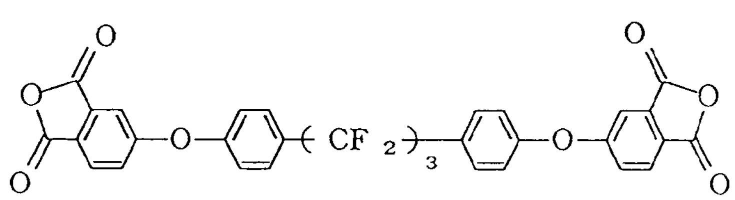

VII-(13): 2,2-bis[4-(3,4-dicarboxyphenoxy)phenyl]hexafluoropropane anhydride

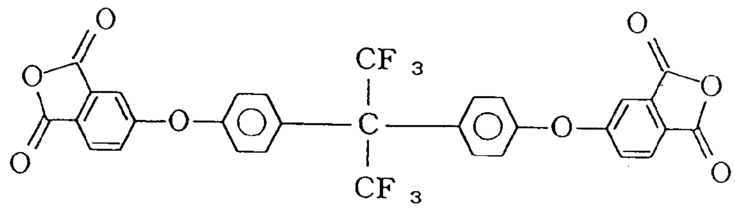

For polyimides of the formula (VIII)

VIII-(1): bis(dicarboxyphenyl)-trifluoromethylbenzene anhydride

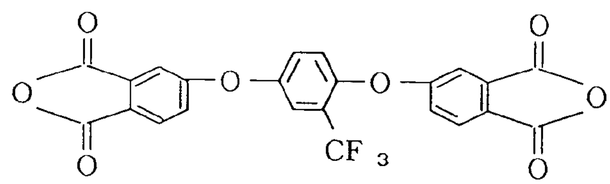

VIII-(2): bis(dicarboxyphenoxy)-bis(trifluoromethyl)benzene anhydride

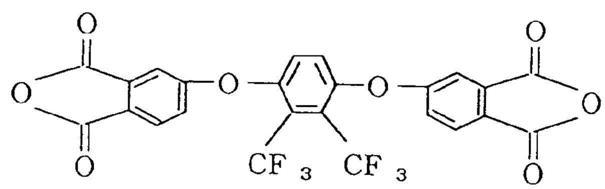

VIII-(3): bis(dicarboxyphenoxy)-tetrakis(trifluoromethyl)benzene anhydride

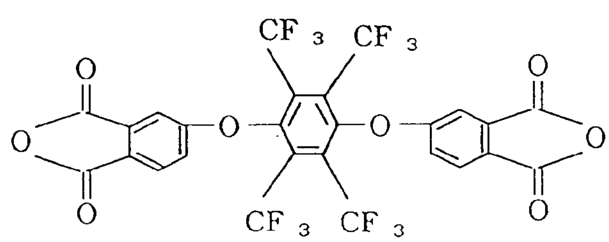

VIII-(4): bis[(trifluoromethyl)dicarboxyphenoxy]benzene anhydride

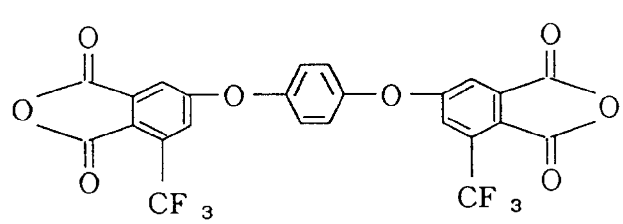

VIII-(5): bis[(trifluoromethyl)dicarboxyphenoxy](trifluoromethyl)benzene

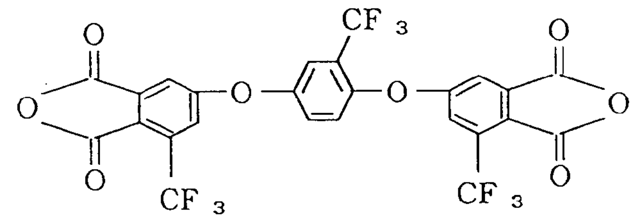

Examples of the diamine used in the present invention may include: m-phenylenediamine, p-phenylenediamine, m-xylenediamine, p-xylenediamine, 4,4'-diaminodiphenyl ether, 4,4'-diaminodiphenylmethane, 3,3'-dimethyl-4,4'-diaminodiphenylmethane, 3,3',5,5'-tetramethyl-4,4'-diaminodiphenylmethane, 2,2'-bis(4-aminophenyl)propane, 4,4'-methylenedianiline, benzidine, 4,4'-diaminodiphenyl sulfide, 4,4'-diaminodiphenyl sulfone, 1,5-diaminonaphthalene, 3,3'-dimethylbenzidine, and 3,3'-dimethoxybenzidine. In addition to the above diamines, fluorine-containing diamines may also be used, examples of which may include: 2,2-bis[4-(4-aminophenoxy)phenyl]hexafluoropropane, 2,2-bis[4-(3-aminophenoxy)phenyl]hexafluoropropane, 2,2-bis[4-(2-aminophenoxy)phenyl]hexafluoropropane, 2,2-bis[4-(2-aminophenoxy-3,5-dimethylphenyl]hexafluoropropane, p-bis(4-amino-2-trifluoromethylphenoxy)benzene, 4,4'-bis(4-amino-2-trifluoromethylphenoxy)biphenyl, 4,4'-bis(4-amino-3-trifluoromethylphenoxy)biphenyl, 4,4'-bis(4-amino-2-trifluoromethylphenoxy)diphenyl sulfone, 4,4'-bis(3-amino-5-trifluoromethylphenoxy)diphenyl sulfone, 2,2-bis[4-(4-amino-2-trifluoromethylphenoxy)phenyl]hexafluoropropane, and 4,4'-bis[(4-aminophenoxy)phenyl]hexafluoropropane.

In the present invention, the above-mentioned carboxylic acids and/or diamines can be used in mixture of two or more species.

Further, in the present invention, the following carboxylic anhydrides can be used in combination with the above-mentioned fluorine-containing carboxylic anhydride to provide a polyimide copolymer: e.g., pyromellitic anhydride, naphthalenetetracarboxylic anhydride, 3,3',4,4'-diphenyltetracarboxylic anhydride, 1,2,5,6-naphthalenetetracarboxylic anhydride, 2,2',3,3'-diphenyltetracarboxylic dianhydride, thiophene-2,3,4,5-tetracarboxylic anhydride, 2,2-bis(3,4-biscarboxyphenyl)propane anhydride, 3,4-dicarboxyphenyl sulfone anhydride, perylene-3,4,9,10-tetracarboxylic anhydride, bis(3,4-dicarboxyphenyl)ether anhydride and 3,3',4,4'-benzophenonetetracarboxylic anhydride.

In order to form a film of the polyimide on a substrate, a solution of a polyamide acid as a precursor of the polyimide in a solvent, such as dimethylformamide, dimethylacetoamide, dimethylsulfoxide or N-methylpyrrolidone at a concentration of 0.01 - 40 wt. % may be applied onto the substrate by spinner coating, spray coating, roller coating, etc., and heated at 100 - 350 °C, preferably 200 - 300 °C, to cause dehydro-cyclization. The thus-formed polyimide film may be rubbed with a cloth, etc. The polyimide film may be formed in a thickness of, e.g., 3 nm (30Å) - 1 micron, preferably 20 - 200 nm (200 - 2000 Å), so as to also function as an insulating film. In this case, the insulating films 13a and 13b can be omitted. Further, in case of forming the polyimide film on the insulating film 13a or 13b, the polyimide film thickness may be set to 20 nm (200 Å) or less, preferably 10 nm (100 Å) or less.

The liquid crystal material used in the present invention may preferably be one showing a phase transition from isotropic phase through cholesteric phase and smectic A phase into chiral smectic C phase in the course of temperature decrease. Particularly, a chiral smectic liquid crystal showing a helical pitch of 0.8 microns or longer in cholesteric phase (measured at a mid temperature in the cholesteric range. Preferred examples of such a liquid crystal material may include liquid crystal materials (1) - (5) below comprising the following liquid crystals "LC-1", "80B" and "80SI*" in the indicated proportions by weight.

LC-1

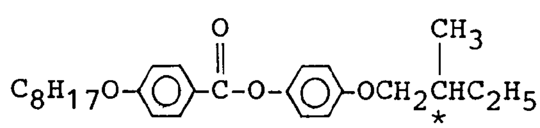

80B

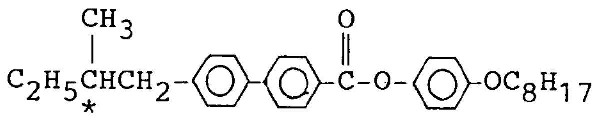

80SI*

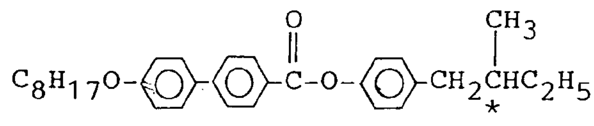

Liquid crystal material

(1) $(LC\text{-}1)_{90}/(80B)_{10}$
(2) $(LC\text{-}1)_{80}/(80B)_{20}$
(3) $(LC\text{-}1)_{70}(80B)_{30}$
(4) $(LC\text{-}1)_{60}/(80B)_{40}$
(5) $(80SI*)_{100}$

Figure 1B is a schematic plan view for illustrating another preferred embodiment of the liquid crystal device according to the present invention. The device comprises a pair of substrates including one substrate closer to a viewing position having a rubbing axis provided in the direction of an arrow 2A and the other substrate farther from the viewing position having a rubbing axis in the direction of an arrow 2B which intersects with the rubbing axis 2A at an intersection angle in the range of o2 - 15 degrees, preferably 3 - 12 degrees. In a particularly preferred embodiment, the rubbing axis 2A is disposed to form an intersection angle θx in the counter-clockwise direction with respect to the rubbing axis 2B.

Figure 2 is a schematic illustration of a ferroelectric liquid crystal cell (device) for explaining operation thereof. Reference numerals 21a and 21b denote substrates (glass plates) on which a transparent electrode of, e.g., $In_2O_3$, $SnO_2$, ITO (indium-tin-oxide), etc., is disposed, respectively. A liquid crystal of an SmC*-phase (chiral smectic C phase) or SmH*-phase (chiral smectic H phase) in which liquid crystal molecular layers 22 are aligned perpendicular to surfaces of the glass plates is hermetically disposed therebetween. Full lines 23 show liquid crystal molecules. Each liquid crystal molecule 23 has a dipole moment (P⊥) 24 in a direction perpendicular to the axis thereof. The liquid crystal molecules 23 continuously form a helical structure in the direction of extension of the substrates. When a voltage higher than a certain threshold level is applied between electrodes formed on the substrates 21a and 21b, a helical structure of the liquid crystal molecule 23 is unwound or released to change the alignment direction of respective liquid crystal molecules 23 so that the dipole moment (P⊥) 24 are all directed in the direction of the electric field. The liquid crystal molecules 23 have an elongated shape and show refractive anisotropy between the long axis and the short axis thereof. Accordingly, it is easily understood that when, for instance, polarizers arranged in a cross nicol relationship, i.e., with their polarizing directions crossing each other, are disposed on the upper and the lower surfaces of the glass plates, the liquid crystal cell thus arranged functions as a liquid crystal optical modulation device of which optical characteristics vary depending upon the polarity of an applied voltage.

Further, when the liquid crystal cell is made sufficiently thin (e.g., 0.1 - 3 microns), the helical structure of the liquid crystal molecules is unwound to provide a non-helical structure even in the absence of an electric field, whereby the dipole moment assumes either of the two states, i.e., Pa in an upper direction 34a or Pb in a lower direction 34b as shown in Figure 3, thus providing a bistable condition. When an electric field Ea or Eb higher than a certain threshold level and different from each other in polarity as shown in Figure 3 is applied to a cell having the above-mentioned characteristics, the dipole moment is directed either in the upper direction 34a or in the lower direction 34b depending on the vector of the electric field Ea or Eb. In correspondence with this, the liquid crystal molecules are oriented in either of a first stable state 33a and a second stable state 33b.

A first advantage attained by using such a ferroelectric liquid crystal cell is that the response speed is quite fast, and a second advantage is that the orientation of the liquid crystal shows bistability. The second advantage will be further explained, e.g., with reference to Figure 3. When the electric field Ea is applied to the liquid crystal molecules, they are oriented in the first stable state 33a. This state is stably retained even if the electric field is removed. On the other hand, when the electric field Eb of which direction is opposite to that of the electric field Ea is applied thereto, the liquid crystal molecules are oriented to the second stable state 33b, whereby the directions of molecules are changed. This state is similarly stably retained even if the electric field is removed. Further, as long as the magnitude of the electric field Ea or Eb being applied is not above a certain threshold value, the liquid crystal molecules are placed in the respective orientation states.

Figure 4A is a schematic sectional view showing an alignment state of liquid crystal molecules attained by the present invention, and Figure 4B is a view showing alignment of corresponding C-directors.

Reference numerals 61a and 61b in Figure 4A denote upper and lower substrates, respectively. Numeral 60 denotes a molecular layer composed of liquid crystal molecules 62, and liquid crystal molecules 62 are aligned so as to change their positions along the bottom face 64 (circular) of a cone 64. Figure 4B more specifically shows a change in C-directors. Referring to Figure 4B, at $U_1$ are shown C-directors 81 (each being a projection of a molecular long axis onto an imaginary plane perpendicular to the normal to a molecular layer 60) in one stable orientation state, and at $U_2$ are shown C-directors 81 in the other stable orientation state.

On the other hand, an alignment state attained by a conventional rubbing-treated polyimide film may be represented by a C-director diagram of Figure 4C, which shows an alignment state wherein molecular axes are twisted in a large degree from the upper substrate 61a to the lower substrate 61b to provide a smaller tilt angle $\theta$.

Figure 5A is a schematic plan view illustrating a tilt angle $\theta$ in an alignment state where C-directors 81 assume a state shown in Figure 4B (referred to as "uniform alignment state"), and Figure 5B is a schematic plan view illustrating a tilt angle $\theta$ in an alignment state where C-directors 81 assume a state shown in Figure 4C (referred to as "spray alignment state"). In these figures, reference numeral 50 denotes a rubbing axis provided to the abovementioned fluorine-containing polyimide film, numeral 51a denotes an average molecular axis in the orientation state $U_1$, numeral 51b denotes an average molecular axis in the orientation state $U_2$, numeral 52a denotes an average molecular axis in the orientation state $S_1$, and numeral 52b denotes an average molecular axis in the orientation state $S_2$. The average molecular axes 51a and 51b can be switched to each other by applying voltages of mutually opposite polarities. Similar switching is caused between the average molecular axes 52a and 52b.

Next, the effectiveness of the uniform alignment state with respect to a delay in optical response (after-image) due to a reverse electric field Vrev is explained.

If the capacitance of an insulating layer constituting a liquid crystal cell is denoted by Ci, the capacitance of a liquid crystal layer is denoted by $C_{LC}$ and the spontaneous polarization of the liquid crystal is denoted by $P_S$, Vrev causing after-image is expressed by the following equation.

$$Vrev = 2P_S/(Ci + C_{LC})$$

Figure 6 is a schematic sectional view illustrating changes is charge distribution direction of $P_S$ and direction of the reverse electric field in a liquid crystal cell. At Figure 6(a), there is shown a distribution of ⊕ and ⊖ charges in a memory state before application of a pulse electric field, where the spontaneous polarization is directed from ⊕ charges to ⊖ charges. At Figure 6(b) is shown a state immediately after removal of a pulse electric field, when the direction of the spontaneous polarization $P_S$ is opposite to that shown at Figure 6(a) (thus, the liquid crystal molecules are inverted from one stable orientation state to the other orientation state) but the distribution of the ⊕ and ⊖ charges is similar to that shown at Figure 6(a), so that a reverse electric field Vrev is generated as indicated by an arrow shown at Figure 6(b). The reverse electric field Vrev disappears in a short time to provide a distribution of ⊕ and ⊖ charges as shown at Figure 6(c).

Figure 7 is a plan view showing a change in optical response in a splay alignment state given by a conventional polyimide alignment film in terms of a change in tilt angle $\theta$. Referring to Figure 7, at the time of application of a pulse electric field, the orientation of liquid crystal molecules is changed from an average molecular axis S(A) in a splay alignment state to be overshot to an average molecular axis $U_2$ in a uniform alignment state close to that providing a maximum tilt angle Ⓗ along a path denoted by an arrow $X_1$, and immediately after the removal of the pulse electric field, the orientation is changed along a path denoted by an arrow $X_2$ to an average molecular axis S(B) in a splay alignment state providing a decreased tilt angle $\theta$ due to the action of the reverse electric field Vrev shown at Figure 6(b). Then, as the reverse electric field Vrev attenuates as shown at Figure 6(c), the orientation is changed along a path denoted by an arrow $X_3$ to an average molecular axis S(C) in a splay alignment state providing a stable orientation state having a somewhat increased tilt angle $\theta$.

In the alignment state given by using the above-mentioned fluorine-containing polyimide film of the present invention, the average molecular axes S(A), S(B) and S(C) in the splay alignment state shown in Figure 7 are not caused but it is possible to form an alignment state with an average molecular axis giving a tilt angle $\theta$ which

is close to a maximum tilt angle Ⓗ. An optical response at this time according to the present invention is shown in Figure 9. Figure 9 shows that a delay in optical response causing after-image is obviated and a high contrast in memory states is caused.

Hereinbelow, the present invention will be explained based on Examples.

Example 1

Two 1.1 mm-thick glass plates each provided with a 0.1 µm (1000 Å)-thick ITO film were respectively coated with a 3.0 wt. % solution of a polyamide acid represented by the formula shown below in a mixture solvent of N-methylpyrrolidone/n-butylcellosolve = 5/1 by means of a spinner rotating at 3000 rpm for 30 min.

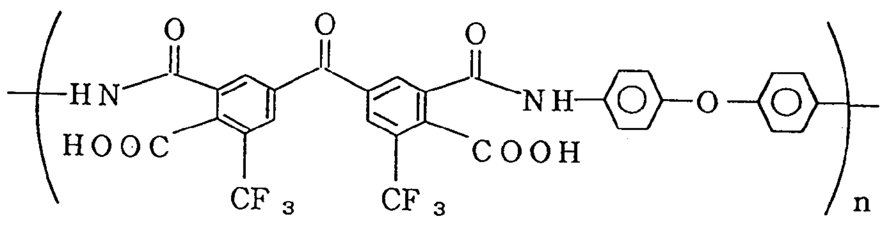

(n (degree of polymerization) = 700 - 2000) After the coating, the film was subjected to curing under heating at 250 °C for about an hour to form a 45 nm (450 Å)-thick film. The coating film was then rubbed in one direction with a nylon-planted cloth.

On one of the two glass plates thus treated, 1.5 microns alumina beads were dispersed, and the other glass plate was superposed thereon so that their rubbing axes were parallel to each other and disposed in the same direction to form a blank cell.

The blank cell was filled with a ferroelectric smectic liquid crystal ("CS-1014" (trade name), available from Chisso K.K.) under vacuum and, after sealing, was gradually cooled from isotropic phase at a rate of 5 °C/hour to 30 °C, whereby an alignment was effected. The "CS-1014" liquid crystal in the cell showed the following phase transition series.

$$\text{Iso.} \xrightarrow{80.5^{\circ}\text{C}} \text{Ch.} \xrightarrow{69.1^{\circ}\text{C}} \text{SmA} \xrightarrow{50^{\circ}\text{C}} \text{SmC*}$$

Iso.: isotropic phase,
Ch.: cholesteric phase,
SmA: smectic A phase,
SmC*: chiral smectic C phase.

The experiment thereafter was performed at 25 °C.

The above-prepared liquid crystal cell was sandwiched between a pair of 90 degrees-cross nicol polarizers to provide a liquid crystal device and was supplied with a pulse of 50 µsec and 30 V. Then, the cross nicol polarizers were set at the extinction position (providing the darkest state), and the transmittance through the liquid crystal device at this time was measured by a photo-multiplier. Then, a pulse of 50 µsec and -30 V was applied to the device, and the transmittance (brightest state) at this time was measured in the same manner, whereby the following data was obtained.

Tilt angle $\theta$ = 15 degrees, transmittance in the brightest state = 44 %, transmittance in the darkest state = 1 %, contrast ratio = 44:1.

The delay in optical response causing after-image was 0.2 sec or less.

The liquid crystal device was subjected to multiplexing drive for display using driving waveforms shown in Figure 10, whereby a high-quality display with a high contrast was attained. Further, after an image display of a prescribed character image, the whole picture area was erased into "white", whereby no after-image was recognized. Referring to Figure 10, at $S_N$, $S_{N+1}$ and $S_{N+2}$ are shown voltage waveforms applied to scanning lines, at I is shown a voltage waveform applied to a representative date line, and at (I-$S_N$) is shown a combined voltage waveform applied to the data line I and the scanning line $S_N$. In the above embodiment, the drive was performed under the conditions of $V_0$ = 5 - 8 volts and T = 20 - 70 µsec.

Examples 2 - 48

Liquid crystal cells were prepared in the same manner as in Example 1 except that the alignment control films (in terms of precursor polyamide acids represented by the formulas) and liquid crystal materials shown in Table 1 below.

The respective cells were tested in the same manner as in Example 1, whereby measured data of contrast ratio and delay time in optical response shown in Table 2 appearing hereinafter were obtained.

The respective cells were subjected to the multiplexing drive for display in the same manner as in Example 1, whereby similar results were attained with respect to contrast and after-image.

Table 1

| Example | Alignment film (precursor polyamide acid) | Liquid crystal material |
| --- | --- | --- |
| 2 | 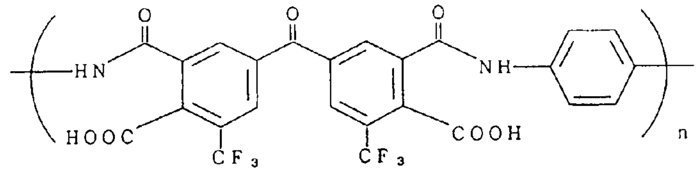 (n=700-2000) | "CS1014" (trade name) (FLC, Chisso K.K.) |
| 3 | 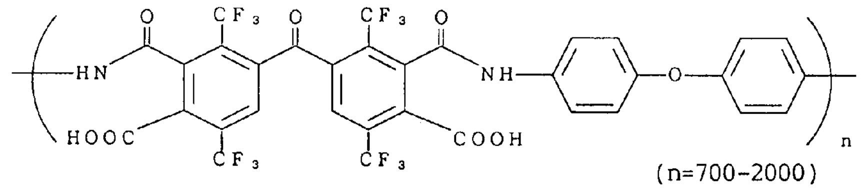 (n=700-2000) | ditto |
| 4 | 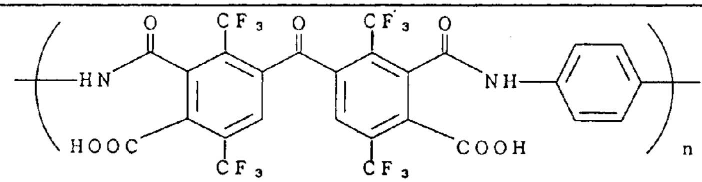 (n=700-2000) | ditto |
| 5 | 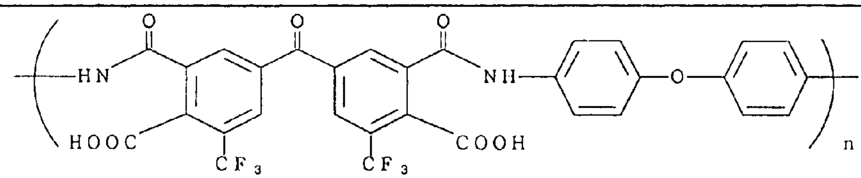 (n=700-2000) | Liquid crystal material (3) described hereinbefore |

...cont.

Table 1 (cont.)

| | | |
|---|---|---|
| 6 | 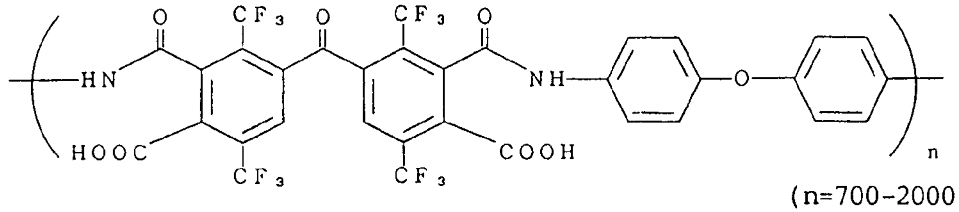 (n=700-2000) | Liquid crystal material (3) described hereinbefore |
| 7 | 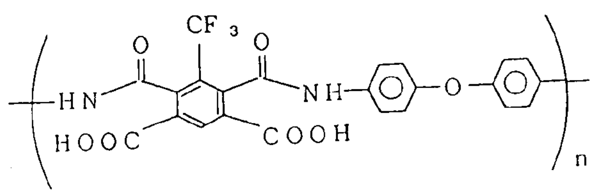 (n=700-2000) | "CS-1014" (trade name) (FLC, Chisso K.K.) |
| 8 | 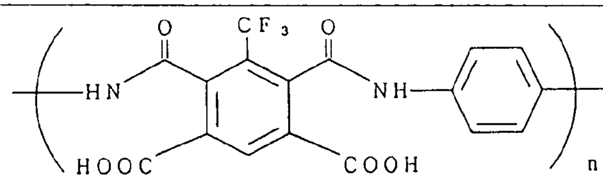 (n=700-2000) | ditto |
| 9 | 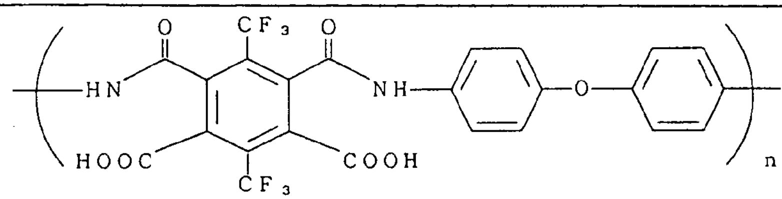 (n=700-2000) | ditto |

Table 1 (cont.)

| | | |
|---|---|---|
| 10 | 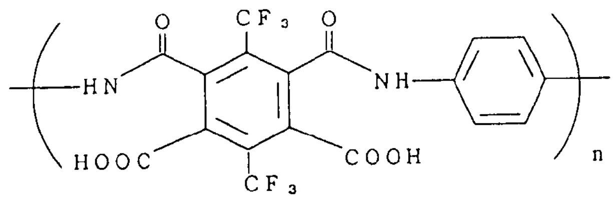 (n=700-2000) | "CS-1014" (trade name) (FLC, Chisso K.K.) |
| 11 | ditto | Liquid crystal material (3) |
| 12 | 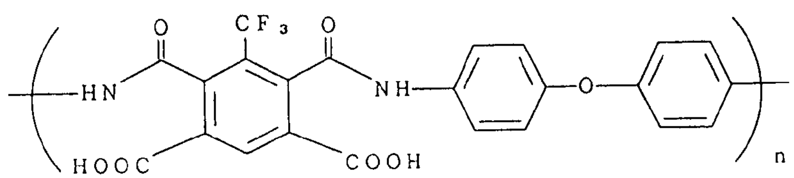 (n=700-2000) | ditto |
| 13 | 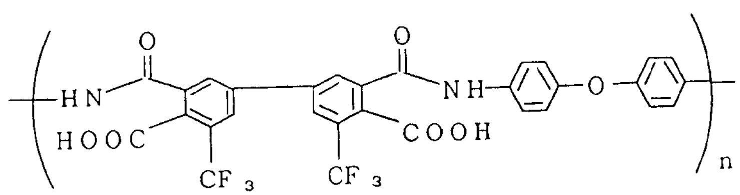 (n=700-2000) | "CS-1014" (trade name) (FLC, Chisso K.K.) |

Table 1 (cont.)

| | | |
|---|---|---|
| 14 | 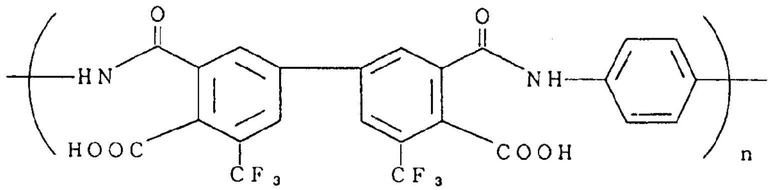 (n=700-2000) | "CS-1014" (trade name) (FLC, Chisso, K.K.) |
| 15 | 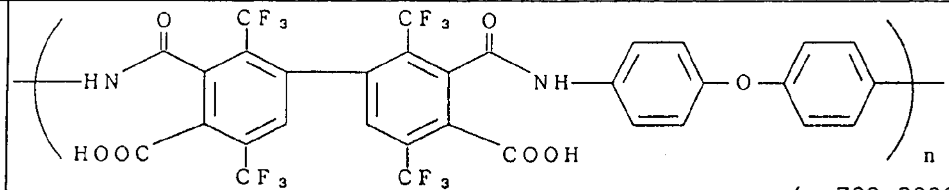 (n=700-2000) | ditto |
| 16 | 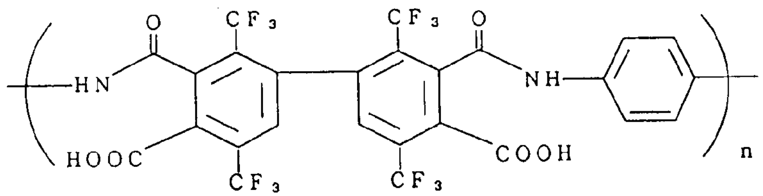 (n=700-2000) | ditto |
| 17 | ditto | Liquid crystal material (3) |

Table 1 (cont.)

| | | |
|---|---|---|
| 18 | 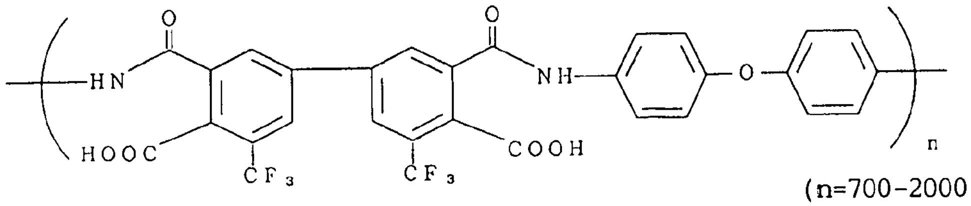 (n=700-2000) | Liquid crystal material (3) |
| 19 | 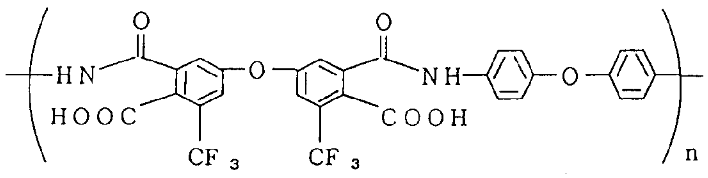 (n=700-2000) | "CS-1014" (trade name) (FLC, Chisso, K.K.) |
| 20 | 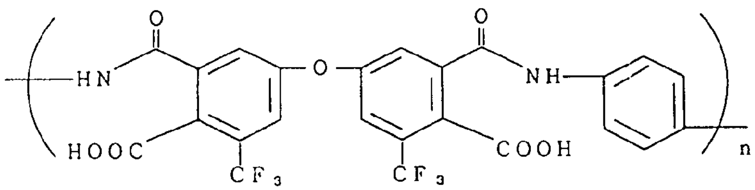 (n=700-2000) | ditto |
| 21 | 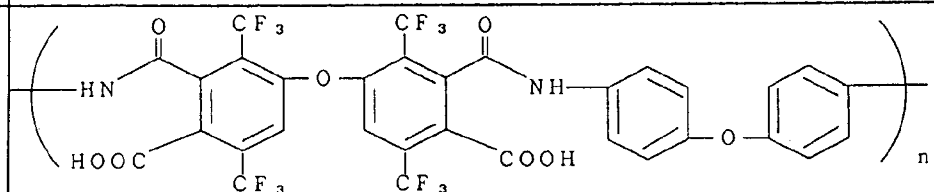 (n=700-2000) | ditto |

Table 1 (cont.)

| | | |
|---|---|---|
| 22 | 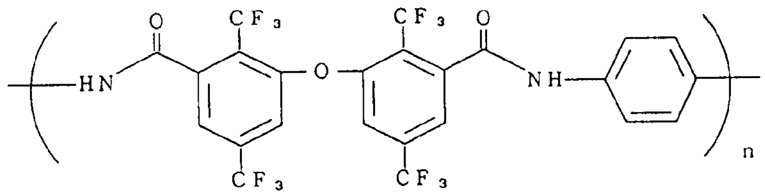 (n=700-2000) | "CS-1014" (trade name) (FLC, Chisso K.K.) |
| 23 | ditto | Liquid crystal material (3) |
| 24 | 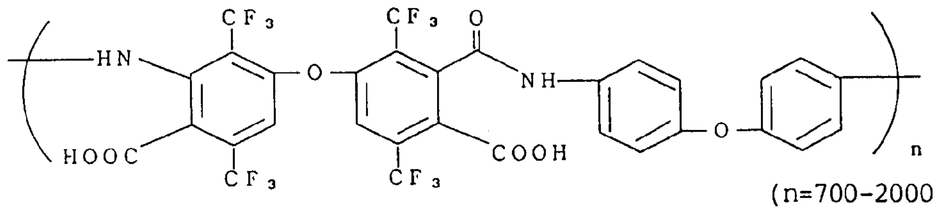 (n=700-2000) | ditto |
| 25 | 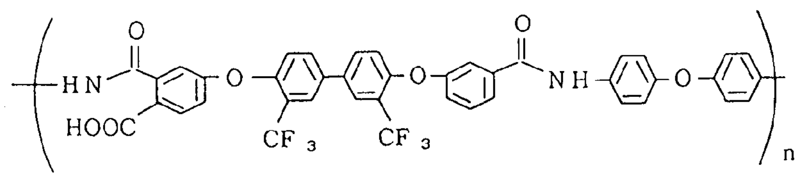 (n=700-2000) | "CS-1014" (trade name) (FLC, Chisso K.K.) |

Table 1 (cont.)

| | | |
|---|---|---|
| 26 | 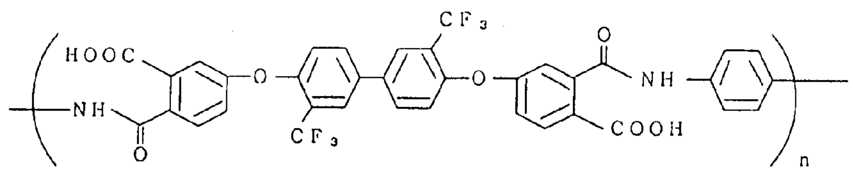 (n=700-2000) | "CS-1014" (trade name) (FLC, Chiosso K.K.) |
| 27 | 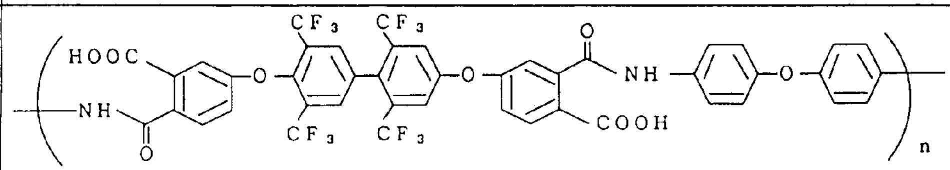 (n=700-2000) | ditto |
| 28 | 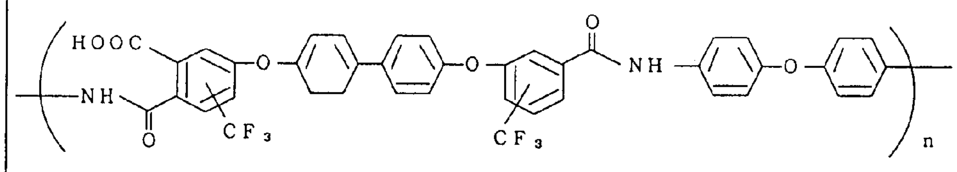 (n=700-2000) | ditto |
| 29 | ditto | Liquid crystal material (3) |

Table 1 (cont.)

| | | |
|---|---|---|
| 30 | 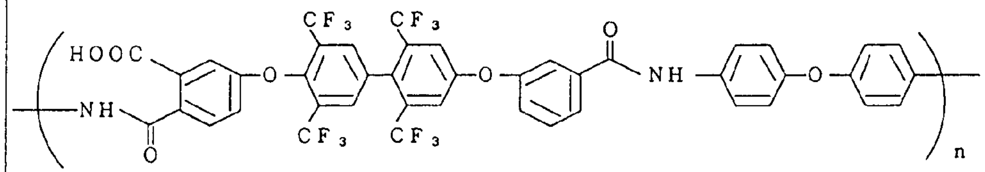 (n=700-2000) | Liquid crystal material (3) |
| 31 | 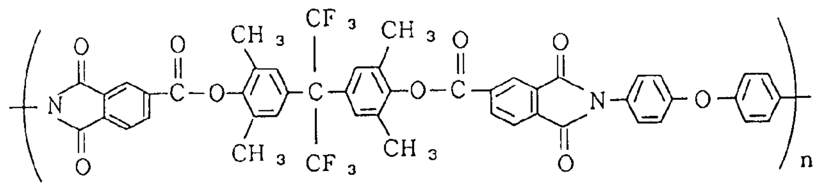 (n=700-2000) | "CS-1014" (trade name) (FLC, Chisso K.K.) |
| 32 | 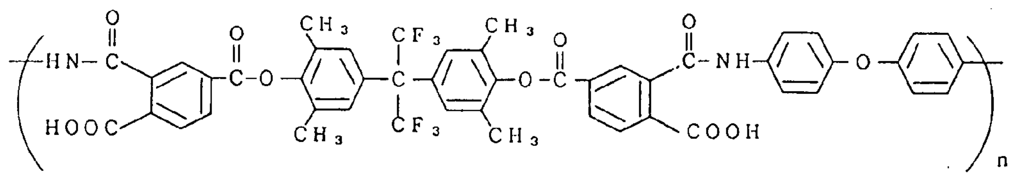 (n=700-2000) | ditto |
| 33 | 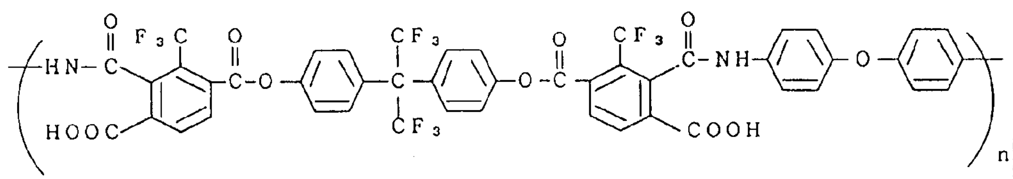 (n=700-2000) | ditto |

Table 1 (cont.)

| | | |
|---|---|---|
| 34 | 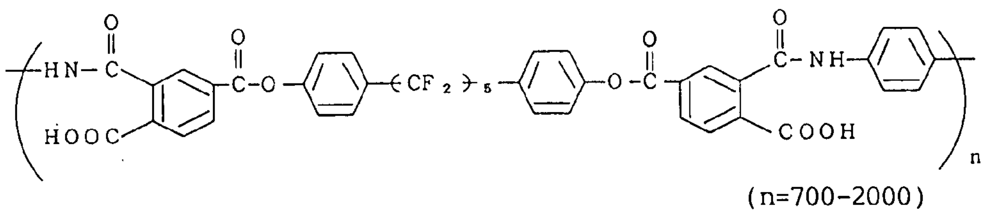 (n=700-2000) | "CS-1014" (trade name) (FLC, Chisso K.K.) |
| 35 | ditto | Liquid crystal material (3) |
| 36 | 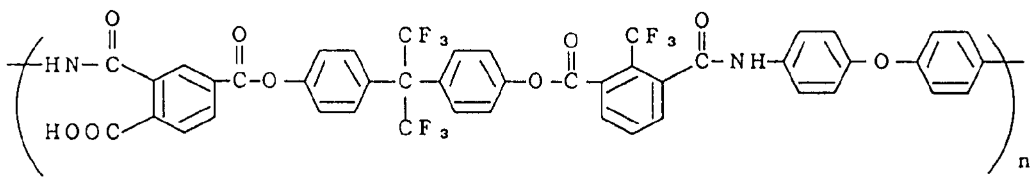 (n=700-2000) | ditto |
| 37 | 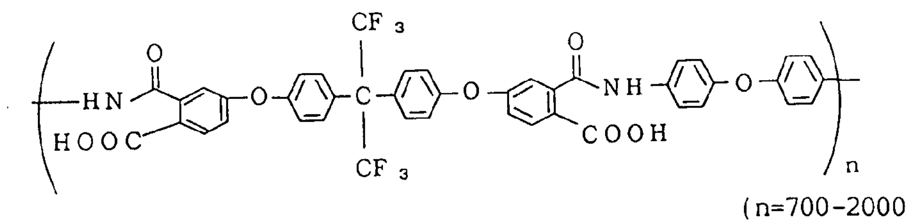 (n=700-2000) | "CS-1014" (trade name) (FLC, Chisso K.K.) |

Table 1 (cont.)

| | | |
|---|---|---|
| 38 | 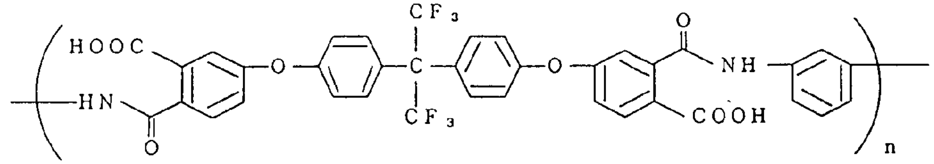 (n=700-2000) | "CS-1014" (trade name) (FLC, Chisso K.K.) |
| 39 | 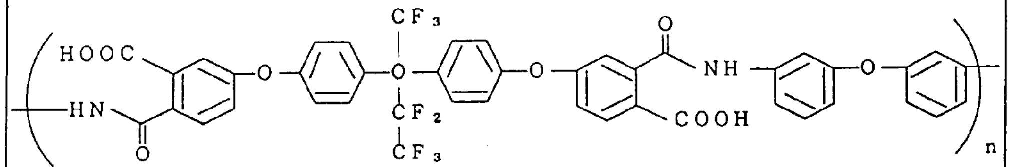 (n=700-2000) | ditto |
| 40 | 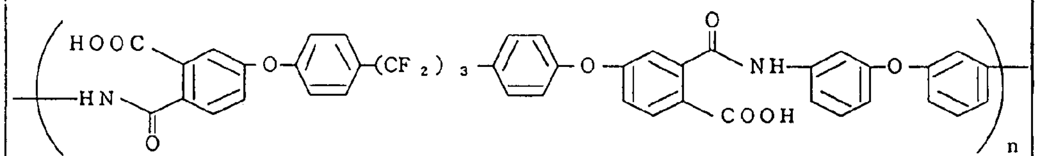 (n=700-2000) | ditto |
| 41 | 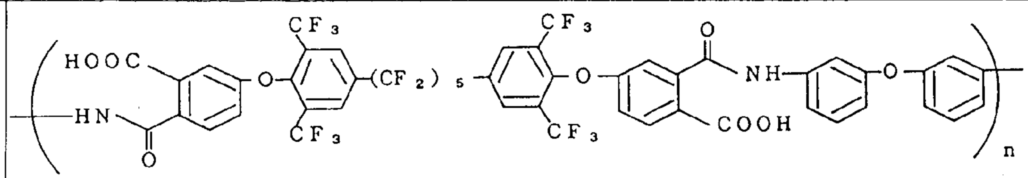 (n=700-2000) | Liquid crystal material (3) |

Table 1 (cont.)

| | | |
|---|---|---|
| 42 | 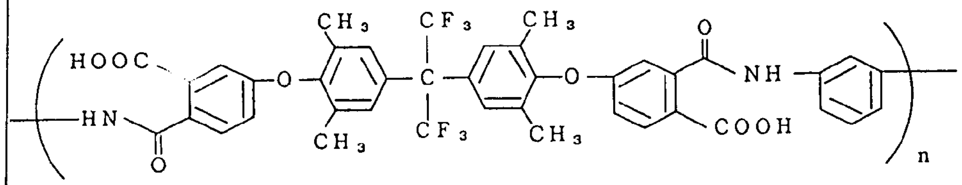 (n=700-2000) | Liquid crystal material (3) |
| 43 | 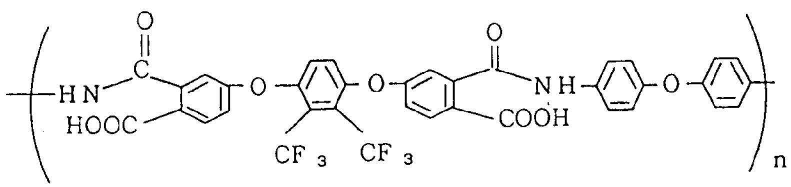 (n=700-2000) | "CS-1014" (trade name) (FLC, Chisso K.K.) |
| 44 | 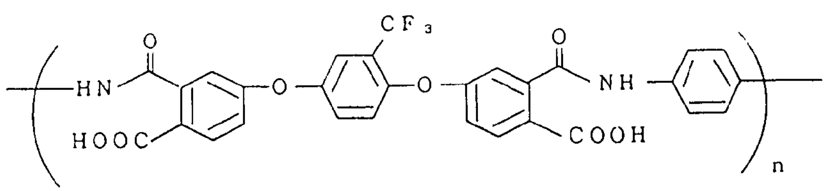 (n=700-2000) | ditto |
| 45 | 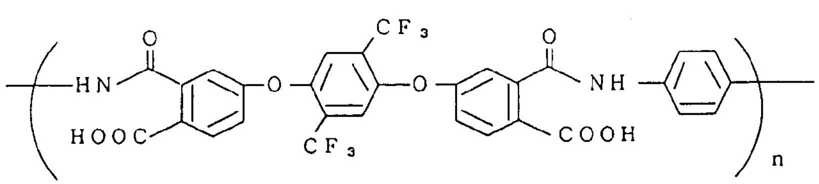 (n=700-2000) | ditto |

Table 1 (cont.)

| | | |
|---|---|---|
| 46 | 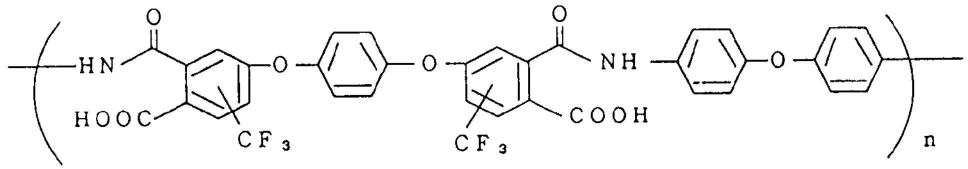 (n=700-2000) | "CS-1014" (trade name) (FLC, Chisso K.K.) |
| 47 | ditto | Liquid crystal material (3) |
| 48 | 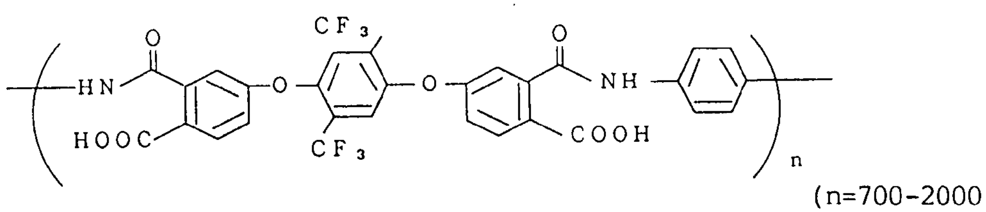 (n=700-2000) | ditto |

Table 2

| Example | Contrast ratio | Delay in optical response (sec) |
|---|---|---|
| 2 | 47:1 | 0.2 |
| 3 | 50:1 | 0.1 |
| 4 | 43:1 | 0.2 |
| 5 | 38:1 | 0.2 |
| 6 | 42:1 | 0.1 |
| 7 | 55:1 | 0.2 |
| 8 | 50:1 | 0.1 |
| 9 | 51:1 | 0.1 |
| 10 | 53:1 | 0.2 |
| 11 | 45:1 | 0.1 |
| 12 | 30:1 | 0.1 |
| 13 | 50:1 | 0.2 |
| 14 | 40:1 | 0.1 |
| 15 | 51:1 | 0.2 |
| 16 | 55:1 | 0.2 |
| 17 | 42:1 | 0.3 |
| 18 | 35:1 | 0.1 |
| 19 | 50:1 | 0.2 |
| 20 | 40:1 | 0.3 |
| 21 | 50:1 | 0.1 |
| 22 | 35:1 | 0.3 |
| 23 | 30:1 | 0.2 |
| 24 | 37:1 | 0.1 |
| 25 | 40:1 | 0.2 |

| | | |
|---|---|---|
| 26 | 35:1 | 0.3 |
| 27 | 46:1 | 0.1 |
| 28 | 27:1 | 0.1 |
| 29 | 50:1 | 0.2 |
| 30 | 37:1 | 0.1 |
| 31 | 45:1 | 0.2 |
| 32 | 47:1 | 0.2 |
| 33 | 58:1 | 0.4 |
| 34 | 40:1 | 0.2 |
| 35 | 39:1 | 0.2 |
| 36 | 44:1 | 0.3 |
| 37 | 30:1 | 0.2 |
| 38 | 20:1 | 0.2 |
| 39 | 25:1 | 0.1 |
| 40 | 21:1 | 0.2 |
| 41 | 30:1 | 0.2 |
| 42 | 27:1 | 0.1 |
| 43 | 50:1 | 0.2 |
| 44 | 45:1 | 0.3 |
| 45 | 36:1 | 0.1 |
| 46 | 40:1 | 0.1 |
| 47 | 40:1 | 0.2 |
| 48 | 25:1 | 0.4 |

Comparative Examples 1 - 4

Liquid crystal cells were prepared in the same manner as in Example 1 except that the alignment control film (in terms of commercially available precursor polyamide acid varnish, the degree of polymerization being each in the range of 700 - 2000) and liquid crystal materials shows in Table 3 below. The measured data of contrast ratio and delay in optical response measured for each of the cells are shown in Table 4 below.

The respective cells were subjected to the multiplexing drive for display in the same manner as in Example 1, whereby the resultant contrasts were smaller than that given by Example 1 and after-image was recognized for each cell.

Table 3

| Comparative Example | Alignment film (polyamide acid varnish) | Liquid crystal material |
|---|---|---|
| 1 | "SP-710" (trade name)<br>(aromatic polyimide varnish, Toray K.K.) | "CS-1014" (trade name)<br>(FLC, Chisso K.K.) |
| 2 | ditto | Liquid crystal material (3) described hereinbefore |
| 3 | "LQ-5200" (trade name)<br>(polyimide varnish, Hitachi Kasei K.K.) | "CS-1014" |
| 4 | ditto | Liquid crystal material (3) |

Table 4

| Comp. Example | Contrast ratio | Delay in optical response (sec) |
|---|---|---|
| 1 | 8:1 | 1.5 |
| 2 | 7:1 | 2.5 |
| 3 | 10:1 | 1.2 |
| 4 | 8:1 | 2.2 |

Examples 49 - 96

Liquid crystal cells were prepared in the same manner as in Example 1 - 48, respectively, except that a pair of substrates for each cell were disposed so that their rubbing axes intersected each other at a counter-clockwise intersection angle of -6 degrees as shown in Figure 1B.

The respective cells prepared above were tested in the same manner as in Examples 1 - 48, respectively, whereby measured data shown in Table 5 below were obtained, showing remarkably improved contrast ratios compared with the corresponding cells of Examples 1 - 48.

Table 5

| Example | Polyimide | Contrast ratio | Delay in optical response (sec) |
|---|---|---|---|
| 49 | Same as Ex.1 | 51:1 | 0.2 |
| 50 | Same as Ex.2 | 49:1 | 0.2 |
| 51 | Same as Ex.3 | 61:1 | 0.2 |
| 52 | Same as Ex.4 | 45:1 | 0.1 |
| 53 | Same as Ex.5 | 44:1 | 0.2 |
| 54 | Same as Ex.6 | 51:1 | 0.1 |
| 55 | Same as Ex.7 | 57:1 | 0.2 |
| 56 | Same as Ex.8 | 59:1 | 0.1 |
| 57 | Same as Ex.9 | 58:1 | 0.1 |
| 58 | Same as Ex.10 | 55:1 | 0.2 |
| 59 | Same as Ex.11 | 53:1 | 0.1 |
| 60 | Same as Ex.12 | 41:1 | 0.1 |
| 61 | Same as Ex.13 | 50:1 | 0.2 |
| 62 | Same as Ex.14 | 41:1 | 0.1 |
| 63 | Same as Ex.15 | 51:1 | 0.2 |
| 64 | Same as Ex.16 | 58:1 | 0.2 |
| 65 | Same as Ex.17 | 45:1 | 0.2 |
| 66 | Same as Ex.18 | 49:1 | 0.1 |
| 67 | Same as Ex.19 | 51:1 | 0.2 |
| 68 | Same as Ex.20 | 49:1 | 0.1 |
| 69 | Same as Ex.21 | 51:1 | 0.1 |
| 70 | Same as Ex.22 | 39:1 | 0.1 |
| 71 | Same as Ex.23 | 40:1 | 0.1 |
| 72 | Same as Ex.24 | 48:1 | 0.1 |

| | | | |
|---|---|---|---|
| 73 | Same as Ex.25 | 51:1 | 0.2 |
| 74 | Same as Ex.26 | 42:1 | 0.2 |
| 75 | Same as Ex.27 | 59:1 | 0.2 |
| 76 | Same as Ex.28 | 39:1 | 0.1 |
| 77 | Same as Ex.29 | 51:1 | 0.2 |
| 78 | Same as Ex.30 | 42:1 | 0.1 |
| 79 | Same as Ex.31 | 49:1 | 0.2 |
| 80 | Same as Ex.32 | 52:1 | 0.4 |
| 81 | Same as Ex.33 | 59:1 | 0.4 |
| 82 | Same as Ex.34 | 42:1 | 0.2 |
| 83 | Same as Ex.35 | 47:1 | 0.2 |
| 84 | Same as Ex.36 | 54:1 | 0.2 |
| 85 | Same as Ex.37 | 42:1 | 0.2 |
| 86 | Same as Ex.38 | 39:1 | 0.2 |
| 87 | Same as Ex.39 | 40:1 | 0.2 |
| 88 | Same as Ex.40 | 42:1 | 0.2 |
| 89 | Same as Ex.41 | 40:1 | 0.2 |
| 90 | Same as Ex.42 | 38:1 | 0.1 |
| 91 | Same as Ex.43 | 51:1 | 0.2 |
| 92 | Same as Ex.44 | 45:1 | 0.2 |
| 93 | Same as Ex.45 | 49:1 | 0.1 |
| 94 | Same as Ex.46 | 49:1 | 0.1 |
| 95 | Same as Ex.47 | 50:1 | 0.2 |
| 96 | Same as Ex.48 | 35:1 | 0.2 |

Comparative Examples 5 - 8

Liquid crystal cells were prepared by using materials shown in Table 6 below in the same manner as in Comparative Example 1 - 4, respectively, except that a pair of substrates for each cell were disposed so that their rubbing axes intersected each other at a counter-clockwise intersection angle of -6 degrees as shown in Figure 1B.

The respective cells prepared above were tested in the same manner as in Comparative Examples 1 - 4,

respectively, whereby measured data shown in Table 7 below were obtained.

Table 6

| Comparative Example | Alignment film (polyamide acid varnish) | Liquid crystal material |
|---|---|---|
| 5 | "SP-710" (trade name) (aromatic polyimide varnish, Toray K.K.) | "CS-1014" (trade name) (FLC, Chisso K.K.) |
| 6 | ditto | Liquid crystal material (3) described hereinbefore |
| 7 | "LQ-5200" (trade name) (polyimide varnish, Hitachi Kasei K.K.) | "CS-1014" |
| 8 | ditto | Liquid crystal material (3) |

Table 7

| Comp. Example | Contrast ratio | Delay in optical response (sec) |
|---|---|---|
| 5 | 9:1 | 1.5 |
| 6 | 7:1 | 2.5 |
| 7 | 11:1 | 1.2 |
| 8 | 7:1 | 2.2 |

As is apparent from the above Examples and Comparative Examples, according to the present invention, there is obtained a liquid crystal device which provides a high-quality display including a high contrast between the bright and dark states, particularly a very large display contrast at the time of multiplexing drive and is free from ugly after-image.

## Claims

1. A liquid crystal device comprising:
   a pair of substrates and a chiral smectic liquid crystal arranged in a plurality of molecular layers each comprising a plurality of liquid crystal molecules disposed between the substrates;
   at least one of said substrates having thereon an alignment film comprising a polyimide which has a fluorine-containing substituent in its carboxylic acid-originated moiety, wherein said polyimide film has been subjected to a uniaxial alignment treatment;
   said molecular layers of the chiral smectic liquid crystal being inclined with respect to both substrates and bent between the substrates.

2. A device according to Claim 1, wherein said polyimide has at least one structural unit represented by the following formulas (I) - (VIII):

(I)

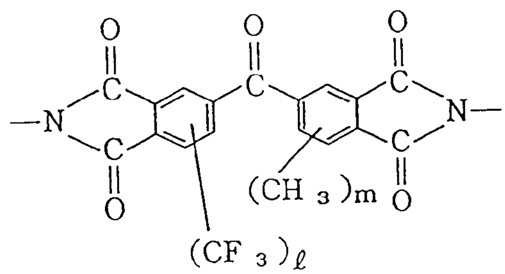

wherein l is an integer of 1 - 3 and m is 0 or an integer of 1 - 3;

(II)

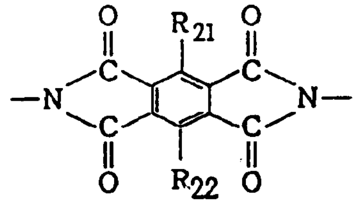

,

wherein $R_{21}$ and $R_{22}$ are respectively hydrogen atom, fluorine atom or $CF_3$ with proviso that at least one of $R_{21}$ and $R_{22}$ is fluorine atom or $-CF_3$;

(III)

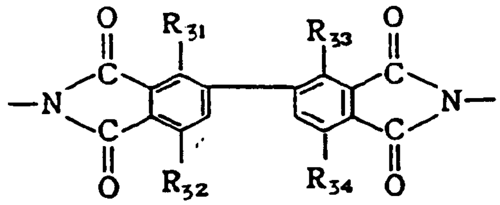

,

wherein $R_{31}$, $R_{32}$, $R_{33}$ and $R_{34}$ are respectively hydrogen atom, fluorine atom or $-CF_3$ with proviso that at least one of $R_{31}$, $R_{32}$, $R_{33}$ and $R_{34}$ is fluorine atom or $-CF_3$;

(IV)

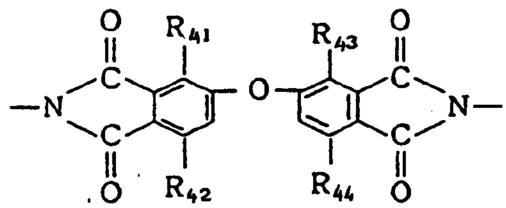

,

wherein $R_{41}$, $R_{42}$, $R_{43}$ and $R_{44}$ are respectively hydrogen atom, fluorine atom or $-CF_3$ with proviso that at least one of $R_{41}$, $R_{42}$, $R_{43}$ and $R_{44}$ is fluorine atom or $-CF_3$;

(V)

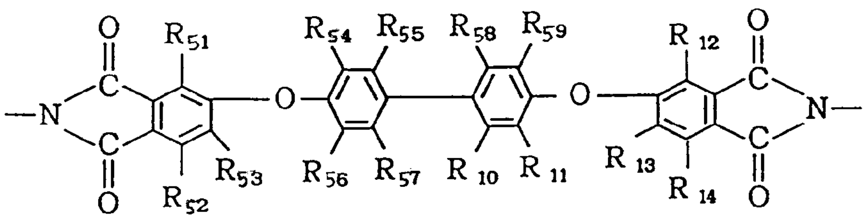

wherein $R_{51}$- $R_{59}$ and $R_{10}$ - $R_{14}$ are respectively hydrogen atom, fluorine atom or $-CF_3$ with proviso that at least one of $R_{51}$ - $R_{59}$ and $R_{10}$ - $R_{14}$ is fluorine atom or $-CF_3$;

(VI)

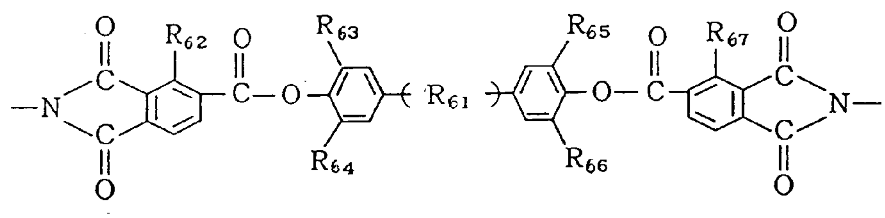

wherein

$R_{61}$ is 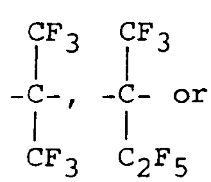 or $-(CH_2)_{n1}-$,

$n_1$ is 0 or an integer of 1 - 7, $R_{52}$ and $R_{67}$ are respectively hydrogen atom or $-CF_3$, $R_{63}$ - $R_{56}$ are respectively

hydrogen atom, alkyl group, halogen atom or $-CF_3$ with proviso that at least one of $R_{62}$ - $R_{67}$ is $-CF_3$ when n1 = 0;

(VII)

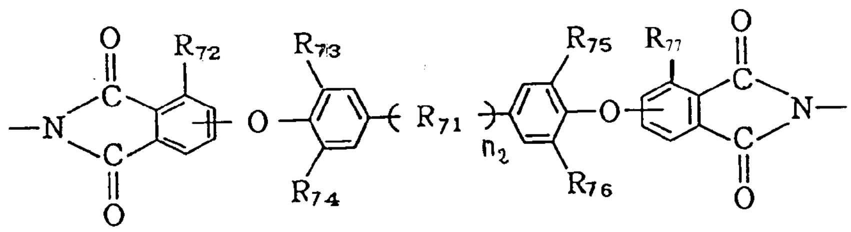

wherein

$R_{71}$ is 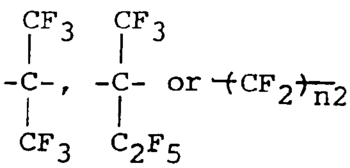

$n_2$ is 0 or an integer of 1 - 7, $R_{72}$ and $R_{77}$ are respectively hydrogen atom or $-CF_3$, $R_{73}$ - $R_{76}$ are respectively hydrogen atom, alkyl group, halogen atom or $-CF_3$ with proviso that at least one of $R_{72}$ - $R_{76}$ is $-CF_3$ when $n_1 = 0$; and

(VIII)

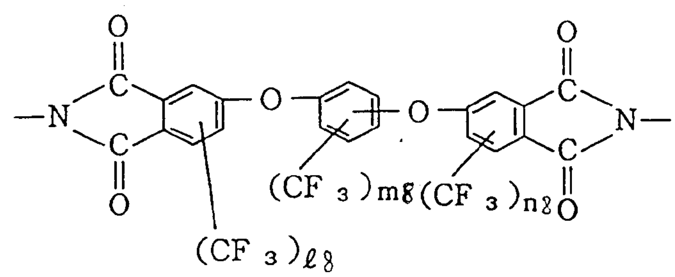

wherein l8, m8 and n8 are respectively 0 or an integer of 1- 3 with proviso that l8 + m8 + n8 ≧ 1.

3. A device according to Claim 1, wherein said uniaxial aligning treatment is rubbing.

4. A device according to Claim 1, wherein said polyimide film subjected to a uniaxial aligning treatment is disposed by the medium of an insulating film on an electrode which is in turn disposed on a substrate.

5. A device according to Claim 4, wherein said polyimide film has a thickness of 5 - 100 nm (50 - 1000 Å), and said insulating film has a thickness of 20 - 100 nm (200 - 1000 Å).

6. A device according to Claim 4, wherein said polyimide film has a thickness of 10 nm (100 Å) or less.

7. A device according to Claim 4, wherein said polyimide film subjected to a uniaxial aligning treatment is disposed by the medium of an insulating film on an electrode which is disposed on each of said pair of substrates, so that the resultant pair of polyimide films have directions of the uniaxial aligning treatment which are parallel to each other.

8. A device according to Claim 7, wherein the pair of polyimide films have the directions of the uniaxial aligning treatment which are parallel to each other and also identical to each other.

9. A device according to Claim 1, wherein said polyimide film subjected to a uniaxial aligning treatment is

disposed by the medium of an insulating film on an electrode which is disposed on each of said pair of substrates, so that the resultant pair of polyimide films have directions of the uniaxial aligning treatment which intersect each other at an intersection angle of 2 - 15 degrees.

**10.** A device according to Claim 9, wherein said intersection angle is 3 - 12 degrees.

**11.** A device according to Claim 1, wherein said pair of substrates are disposed to have a spacing small enough to suppress the formation of a helical alignment structure of the chiral smectic liquid crystal.

**12.** A device according to Claim 11, wherein said chiral smectic liquid crystal has been cooled from a temperature higher than a range giving smectic A phase to form at least two different stable orientation states.

## Patentansprüche

**1.** Flüssigkristallvorrichtung, umfassend ein Paar Träger und einen chiralen smektischen Flüssigkristall, der in einer Vielzahl von molekularen Schichten angeordnet ist, von der jede eine Vielzahl von Flüssigkristallmolekülen umfaßt, die zwischen den Trägern eingebracht sind, wobei sich auf mindestens einem der Träger ein Ausrichtungsfilm befindet, der ein Polyimid umfaßt, dessen von der Carbonsäure herrührender Molekülteil einen fluorhaltigen Substituenten aufweist, wobei der Polyimidfilm einer Behandlung zur uniaxialen Ausrichtung unterworfen wurde, wobei die molekularen Schichten des chiralen, smektischen Flüssigkristalls bezüglich der beiden Träger geneigt und zwischen den Trägern gebogen sind.

**2.** Vorrichtung nach Anspruch 1, worin das Polyimid mindestens eine Struktureinheit besitzt, die durch die folgenden Formeln (I) bis (VIII) dargestellt ist:

(I)

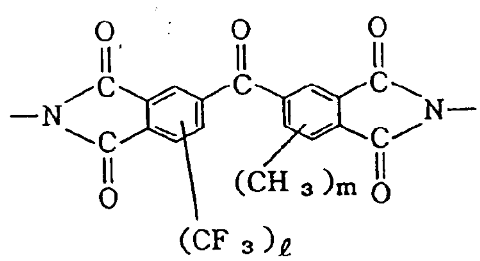

,

worin *l* eine ganze Zahl von 1 bis 3 ist, und *m* 0 oder eine ganze Zahl von 1 bis 3 ist,

(II)

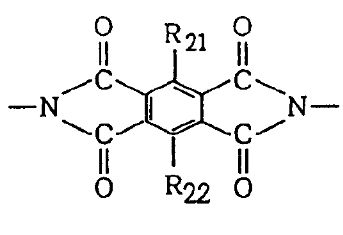

,

worin $R_{21}$ und $R_{22}$ jeweils ein Wasserstoffatom, ein Fluoratom oder $-CH_3$ darstellen unter der Bedingung, daß mindestens einer der Reste $R_{21}$ oder $R_{22}$ ein Fluoratom oder $-CF_3$ darstellt,

(III)

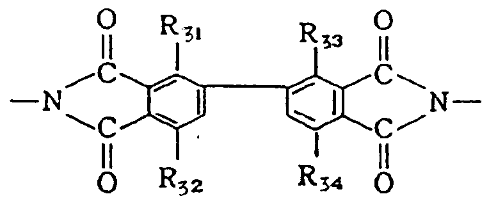

,

worin $R_{31}$, $R_{32}$, $R_{33}$ und $R_{34}$ jeweils ein Wasserstoffatom, ein Fluoratom oder $-CH_3$ darstellen unter der Bedingung, daß mindestens einer der Reste $R_{31}$, $R_{32}$, $R_{33}$ oder $R_{34}$ ein Fluoratom oder $-CF_3$ darstellt,

(IV)

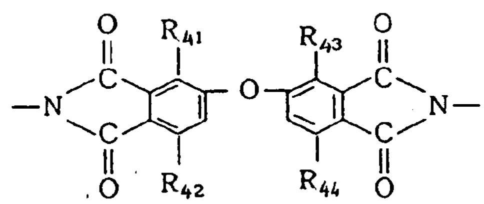

,

worin $R_{41}$, $R_{42}$, $R_{43}$ und $R_{44}$ jeweils ein Wasserstoffatom, ein Fluoratom oder $-CH_3$ darstellen unter der Bedingung, daß mindestens einer der Reste $R_{41}$, $R_{42}$, $R_{43}$ oder $R_{44}$ ein Fluoratom oder $-CF_3$ darstellt,

(V)

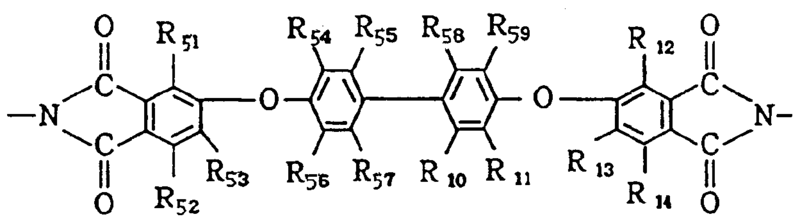

worin $R_{51}$ bis $R_{59}$ und $R_{10}$ bis $R_{14}$ jeweils ein Wasserstoffatom, ein Fluoratom oder $-CH_3$ darstellen unter der Bedingung, daß mindestens einer der Reste $R_{51}$ bis $R_{59}$ und $R_{10}$ bis $R_{14}$ ein Fluoratom oder $-CF_3$ darstellt,

(VI)

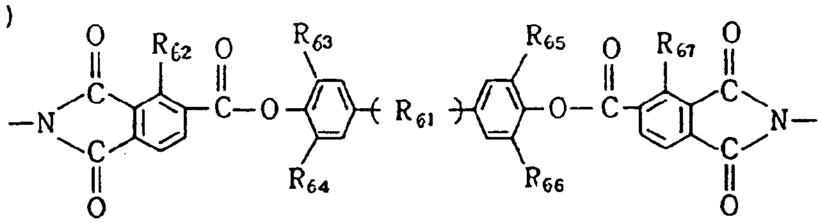

worin

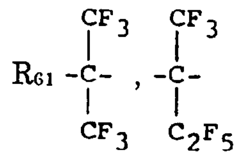

oder $-(CH_2)_{n1}-$ darstellt, $n_1$ 0 oder eine ganze Zahl von 1 bis 7 ist, $R_{62}$ und $R_{67}$ jeweils ein Wasserstoffatom oder $-CF_3$ darstellen und $R_{63}$ bis $R_{66}$ jeweils ein Wasserstoffatom, eine Alkylgruppe, ein Halogenatom oder $-CF_3$ darstellen unter der Bedingung, daß mindestens einer der Reste $R_{62}$ bis $R_{67}$ $-CF_3$ darstellt, wenn $n_1 = 0$ ist,

(VII)

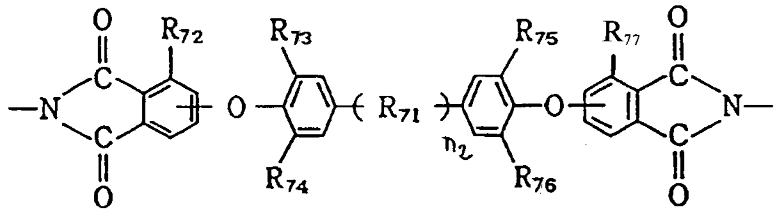

worin

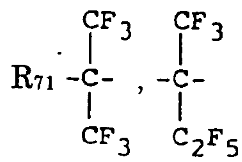

oder $-(CF_2)_{n2}-$ darstellt, $n_2$ 0 oder eine ganze Zahl von 1 bis 7 ist, $R_{72}$ und $R_{77}$ jeweils ein Wasserstoffatom oder $-CF_3$ darstellen und $R_{73}$ bis $R_{76}$ jeweils ein Wasserstoffatom, eine Alkylgruppe, ein Halogenatom oder $-CF_3$ darstellen unter der Bedingung, daß mindestens einer der $R_{72}$ bis $R_{76}$ $-CF_3$ darstellt, wenn $n_2 = 0$ ist, und

(VIII)

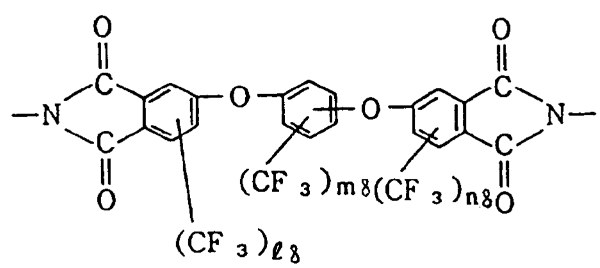

worin $l8$, m8 und n8 jeweils 0 oder eine ganze Zahl von 1 bis 3 unter der Bedingung sind, daß $l8 + m8 + n8 \geqq 1$ ist.

**3.** Vorrichtung nach Anspruch 1, wobei die Behandlung zur uniaxialen Ausrichtung Reiben ist.

**4.** Vorrichtung nach Anspruch 1, wobei der Polyimidfilm, der einer Behandlung zur uniaxialen Ausrichtung unterworfen wurde, mittels eines Isolierfilmes auf einer Elektrode angeordnet ist, die ihrerseits auf dem Träger aufgebracht wurde.

5. Vorrichtung nach Anspruch 4, wobei der Polyimidfilm eine Dicke von 5 bis 100 nm (50 bis 1000 Å) besitzt, und der Isolierfilm eine Dicke von 20 bis 100 nm (200 bis 1000 Å) besitzt.

6. Vorrichtung nach Anspruch 4, wobei der Polyimidfilm eine Dicke von 10 nm (100 Å) oder weniger besitzt.

7. Vorrichtung nach Anspruch 4, wobei der Polyimidfilm, der einer Behandlung zur uniaxialen Ausrichtung unterworfen wurde, mittels eines Isoliermines auf einer Elektrode aufgebracht wurde, die auf jedem der beiden Träger aufgebracht ist, so daß das sich ergebende Paar Polyimidfilme Richtungen der Behandlung zur uniaxialen Ausrichtung besitzt, die zueinander parallel sind.

8. Vorrichtung nach Anspruch 7, wobei das Paar Polyimidfilme die Richtungen der Behandlung zur uniaxialen Ausrichtung besitzt, die zu einander parallel und auch miteinander identisch sind.

9. Vorrichtung nach Anspruch 1, wobei der Polyimidfilm, der einer Behandlung zur uniaxialen Ausrichtung unterworfen wurde, mittels eines Isolierfilmes auf einer Elektrode aufgebracht wurde, die auf jedem der beiden Träger aufgebracht wurde, so daß das sich ergebende Paar Polyimidfilme Richtungen der Behandlung zur uniaxialen Ausrichtung besitzt, die einander mit einem Schnittwinkel von 2 bis 15 Grad schneiden.

10. Vorrichtung nach Anspruch 9, wobei der Schnittwinkel 3 bis 12 Grad beträgt.

11. Vorrichtung nach Anspruch 1, wobei das Paar Träger so angebracht ist, daß sie einen Abstand voneinander bilden, der klein genug ist, die Bildung einer Struktur spiralförmiger Ausrichtung eines chiralen, smektischen Flüssigkristalls zu unterdrücken.

12. Vorrichtung nach Anspruch 11, wobei der chirale, smektische Flüssigkristall von einer Temperatur, die höher als ein Bereich ist, der eine smektische A-Phase ergibt, abgekühlt wurde, wodurch sich mindestens zwei unterschiedliche, stabile Orientierungszustände bilden.

## Revendications

1. Dispositif à cristal liquide, comprenant :

une paire de substrats et un cristal liquide smectique chiral agencé en plusieurs couches moléculaires comprenant chacune une pluralité de molécules de cristal liquide disposées entre les substrats ;

au moins l'un des substrats portant un film d'alignement comprenant un polyimide qui porte un substituant contenant du fluor dans son fragment dérivé d'acide carboxylique, ce film de polyimide ayant été soumis à un traitement d'alignement uniaxial ;

les couches moléculaires du cristal liquide smectique chiral étant inclinées par rapport aux deux substrats et étant courbées entre les substrats.

2. Dispositif suivant la revendication 1, dans lequel le polyimide a au moins un motif structural représenté par les formules (I) - (VIII) suivantes :

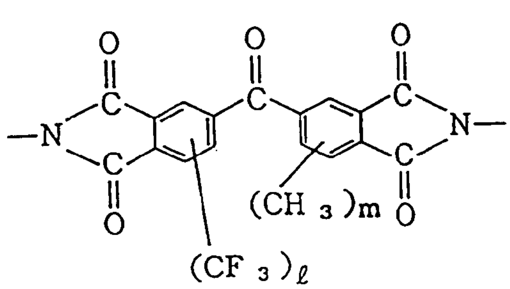

dans lesquelles l est un nombre entier de 1 à 3 et m est égal à 0 ou un nombre entier de 1 à 3 ;

(II)

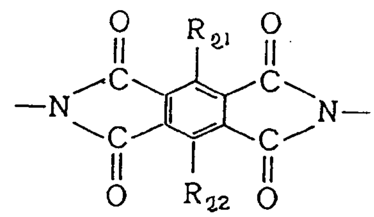

dans laquelle $R_{21}$ et $R_{22}$ représentent respectivement un atome d'hydrogène, un atome de fluor ou un groupe $CF_3$, sous réserve que l'un au moins de $R_{21}$ et $R_{22}$ soit un atome de fluor ou un groupe $-CF_3$ ;

(III)

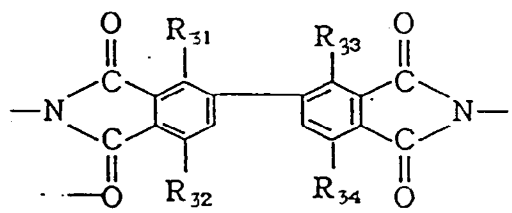

dans laquelle $R_{31}$, $R_{32}$, $R_{33}$ et $R_{34}$ représentent respectivement un atome d'hydrogène, un atome de fluor ou un groupe $-CF_3$ sous réserve que l'un au moins de $R_{31}$, $R_{32}$, $R_{33}$ et $R_{34}$ soit un atome de fluor ou un aroune $-CF_3$ ;

(IV)

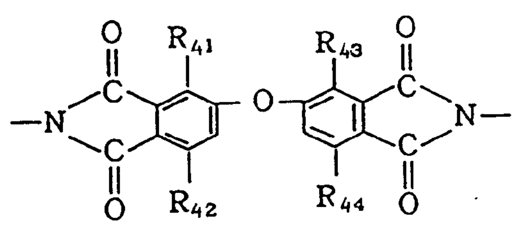

dans laquelle $R_{41}$, $R_{42}$, $R_{43}$ et $R_{44}$ représentent respectivement un atome d'hydrogène, un atome de fluor ou un groupe $-CF_3$ ; sous réserve que l'un au moins de $R_{41}$, $R_{42}$, $R_{43}$ et $R_{44}$ soit un atome de fluor ou un groupe $-CF_3$ ;

(V)

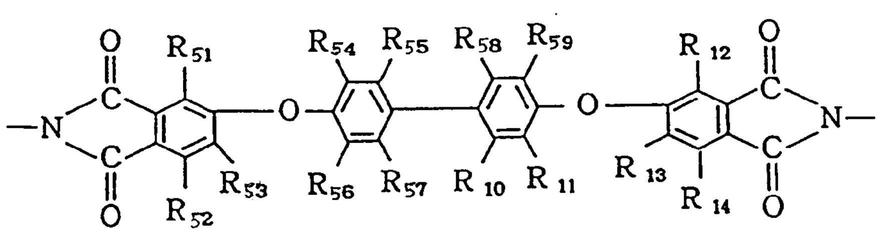

dans laquelle $R_{51}$ à $R_{59}$ et de $R_{10}$ à $R_{14}$ représentent respectivement un atome d'hydrogène, un atome de

fluor ou un groupe $-CF_3$, sous réserve que l'un au moins de $R_{51}$ à $R_{59}$ et de $R_{10}$ à $R_{14}$ soit un atome de fluor ou un groupe $-CF_3$ ;

(VI)

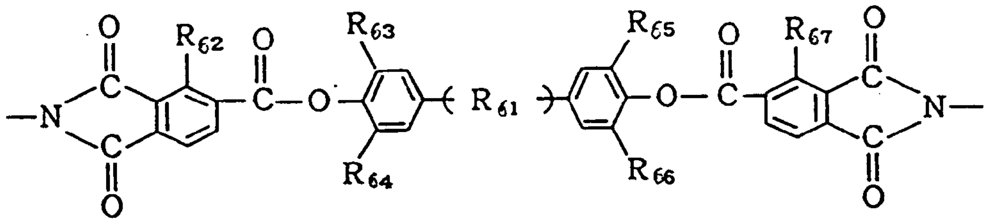

dans laquelle

$R_{61}$ représente $R_{51}$ is

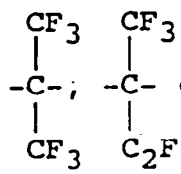

or $-(CH_2)_{n1}-$,

$n_1$ est égal à 0 ou à un nombre entier de 1 à 7, $R_{62}$ et $R_{67}$ représentent respectivement un atome d'hydrogène ou un groupe $-CF_3$, $R_{53}$ à $R_{56}$ représentent respectivement un atome d'hydrogène, un groupe alkyle, un atome d'halogène ou un groupe $-CF_3$, sous réserve que l'un au moins de $R_{62}$ à $R_{57}$ soit un groupe $-CF_3$ lorsque $n_1$ est égal à 0 ;

(VII)

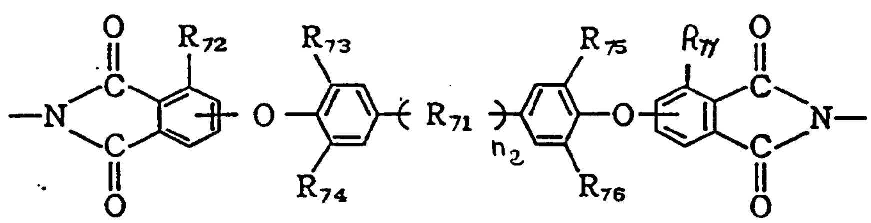

dans laquelle

$R_{71}$ représente $R_{71}$ is

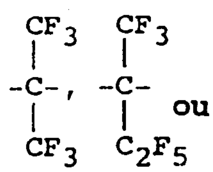

ou $-(CF_2)_{n2}-$

$n_2$ est égal à 0 ou à un nombre entier de 1 à 7, $R_{72}$ et $R_{77}$ représentent respectivement un atome d'hydrogène ou un groupe $-CF_3$, $R_{73}$ à $R_{76}$ représentent respectivement un atome d'hydrogène, un groupe alkyle, un atome d'halogène ou un groupe $-CF_3$, sous réserve que l'un au moins de $R_{72}$ à $R_{76}$ soit un groupe $-CF_3$ lorsque $n_1$ est égal à 0 ; et

(VIII)

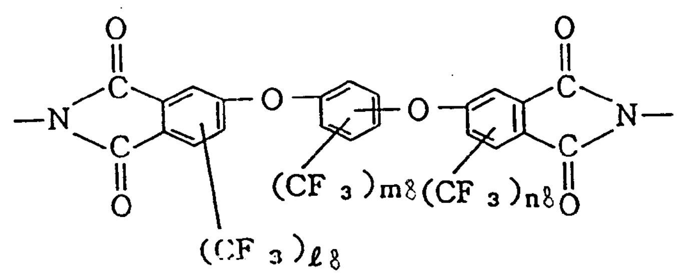

dans laquelle l8, m8 et n8 représentent respectivement 0 ou un nombre entier de 1 à 3, sous réserve que la somme l8 + m8 + n8 soit supérieure ou égale à 1.

3. Dispositif suivant la revendication 1, dans lequel le traitement d'alignement axial est un frottement.

4. Dispositif suivant la revendication 1, dans lequel le film de polyimide soumis à un traitement d'alignement uniaxial est disposé au moyen d'un film isolant sur une électrode qui est elle-même disposée sur un substrat.

5. Dispositif suivant la revendication 4, dans lequel le film de polyimide a une épaisseur de 5 à 100 nm (50 à 1000 Å), et le film isolant a une épaisseur de 20 à 100 nm (200 à 1000 Å).

6. Dispositif suivant la revndication 4, dans lequel le film de polyimide a une épaisseur de 10 nm (100 Å) ou moins.

7. Dispositif suivant la revendication 4, dans lequel le film de polyimide soumis à un traitement d'alignement uniaxial est disposé au moyen d'un film isolant sur une électrode qui est disposée sur chacun des substrats formant la paire, si bien que les films polyimide formant la paire résultante ont des directions de traitement d'alignement uniaxial qui sont parallèles l'une à l'autre.

8. Dispositif suivant la revendication 7, dans lequel les films de polyimide formant une paire ont des directions de traitement d'alignement uniaxial qui sont parallèles entre elles qui sont aussi identiques l'une à l'autre.

9. Dispositif suivant la revendication 1, dans lequel le film de polyimide soumis à un traitement d'alignement uniaxial est disposé au moyen d'un film isolant sur une électrode qui est disposée sur chacun des substrats formant la paire, si bien que les deux films de polyimide résultant ont des directions du traitement d'alignement uniaxial qui se coupent sous un angle d'intersection de 2 à 15 degrés.

10. Dispositif suivant la revendication 9, dans lequel l'angle d'intersection est de 3 à 12 degrés.

11. Dispositif suivant la revendication 1, dans lequel les substrats formant la paire sont disposés de manière à présenter un espacement suffisamment petit pour supprimer la formation d'une structure d'alignement en hélice du cristal liquide smectique chiral.

12. Dispositif suivant la revendication 11, dans lequel le cristal liquide smectique chiral a été refroidi depuis une température supérieure à une plage donnant une phase smectique A pour former au moins deux états d'orientation stables différents.

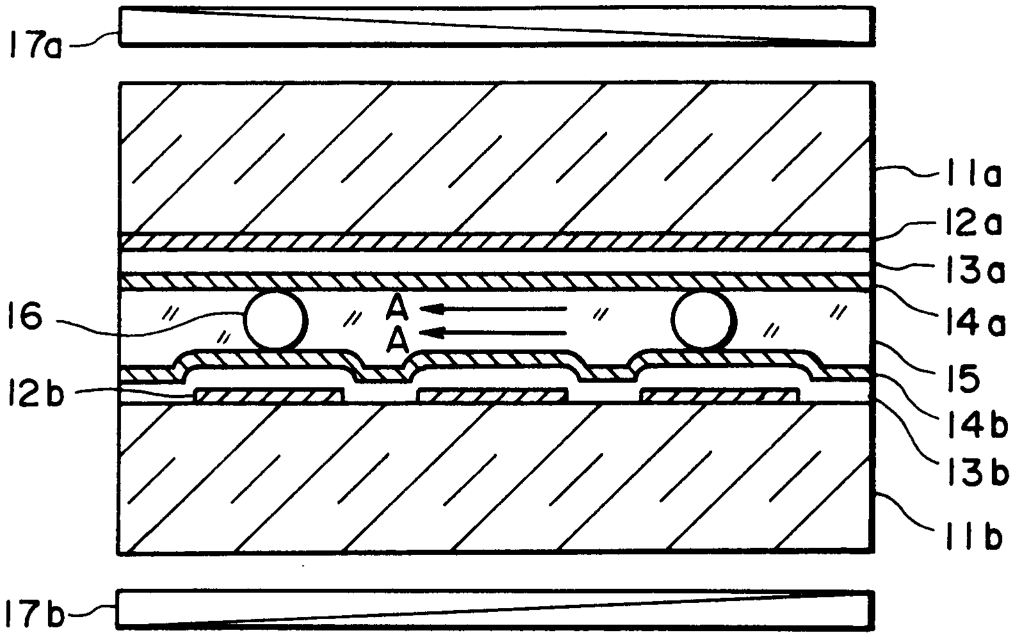


FIG. 1A

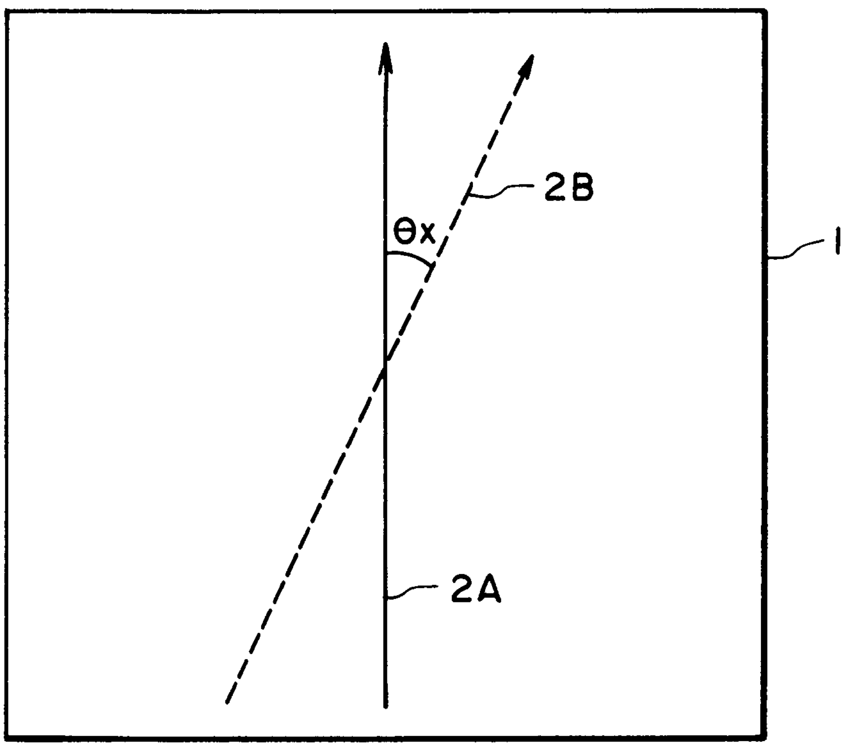


FIG. 1B

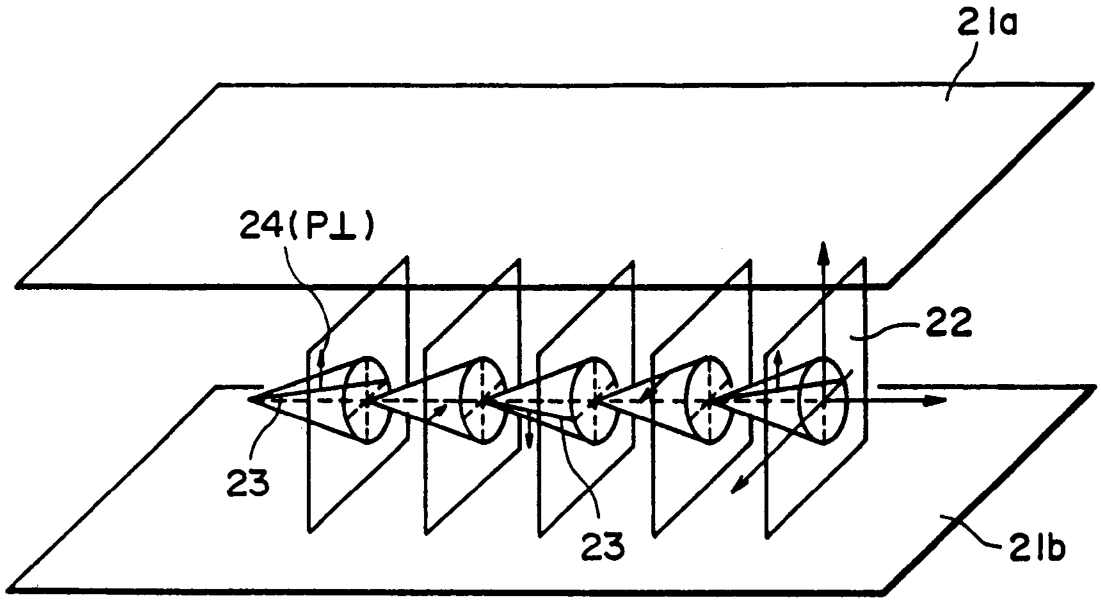


FIG. 2

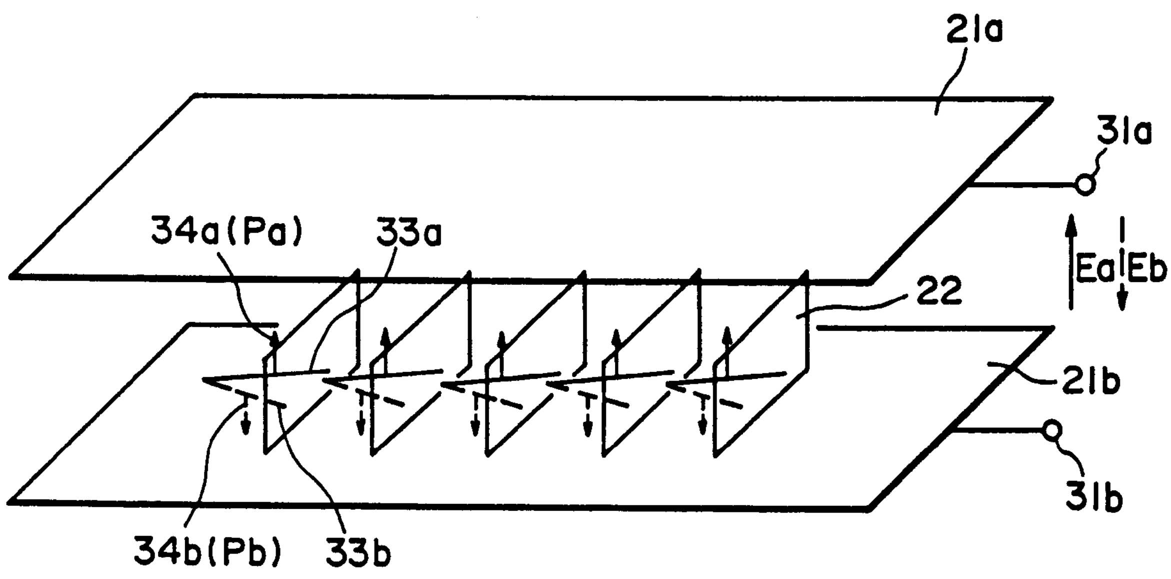


FIG. 3

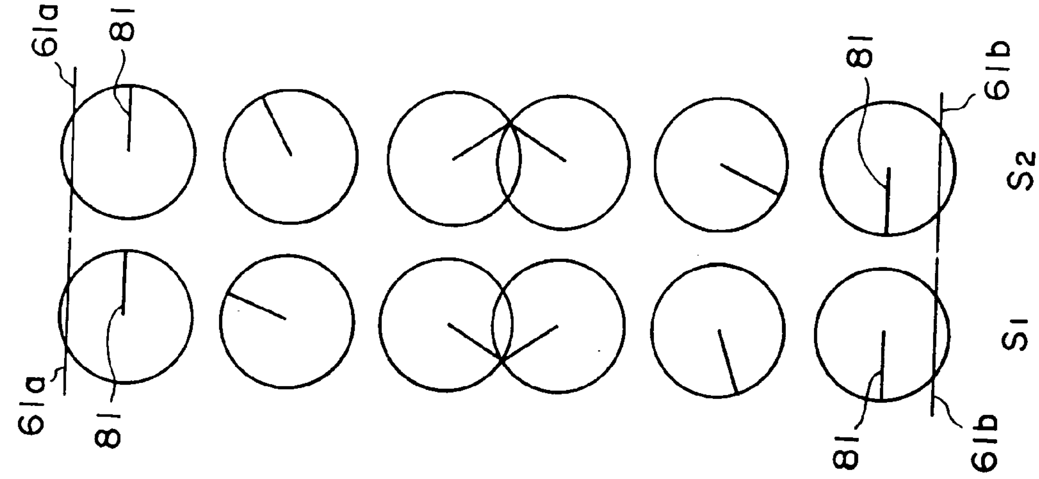


FIG. 4C

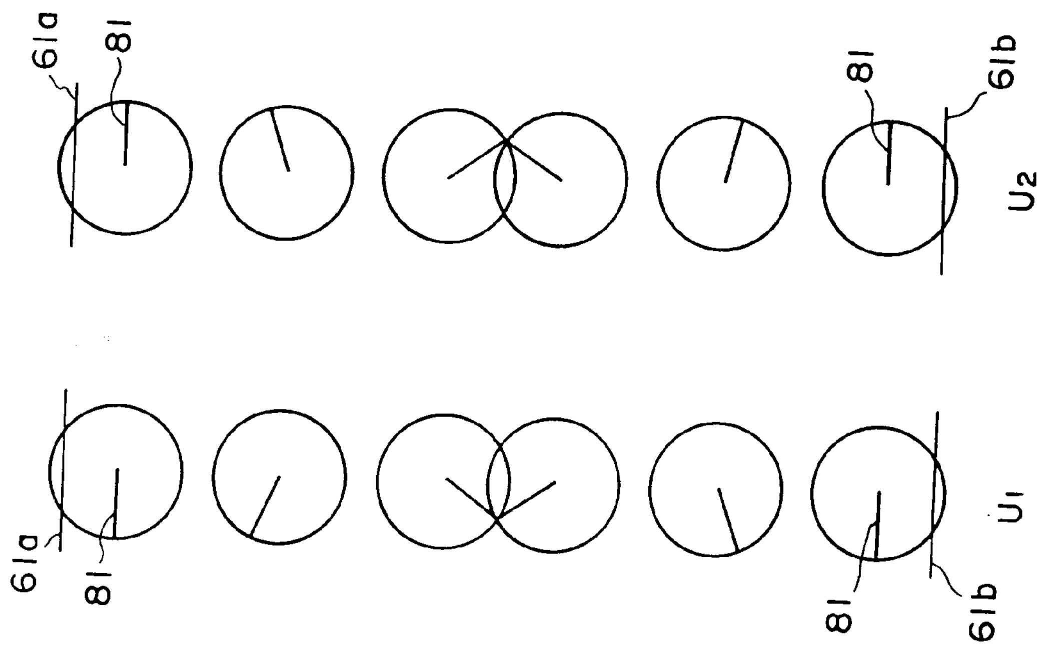


FIG. 4B

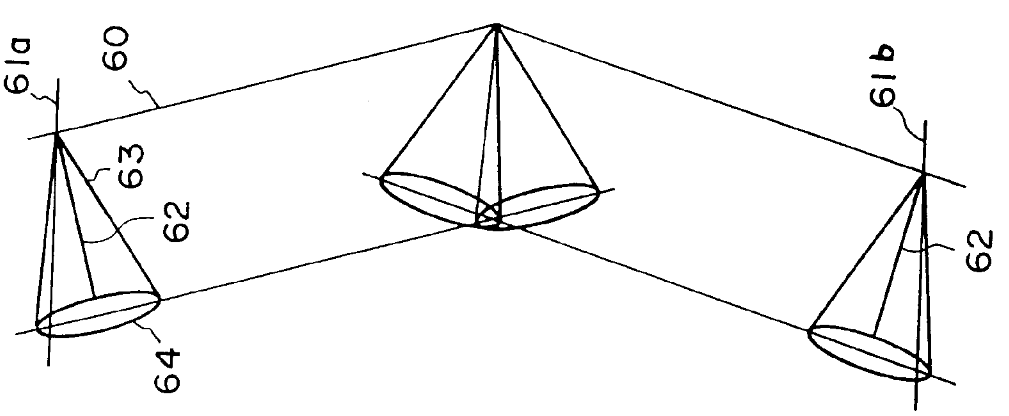


FIG. 4A

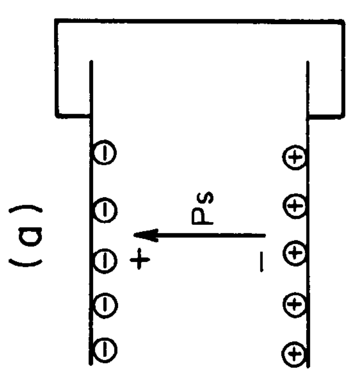


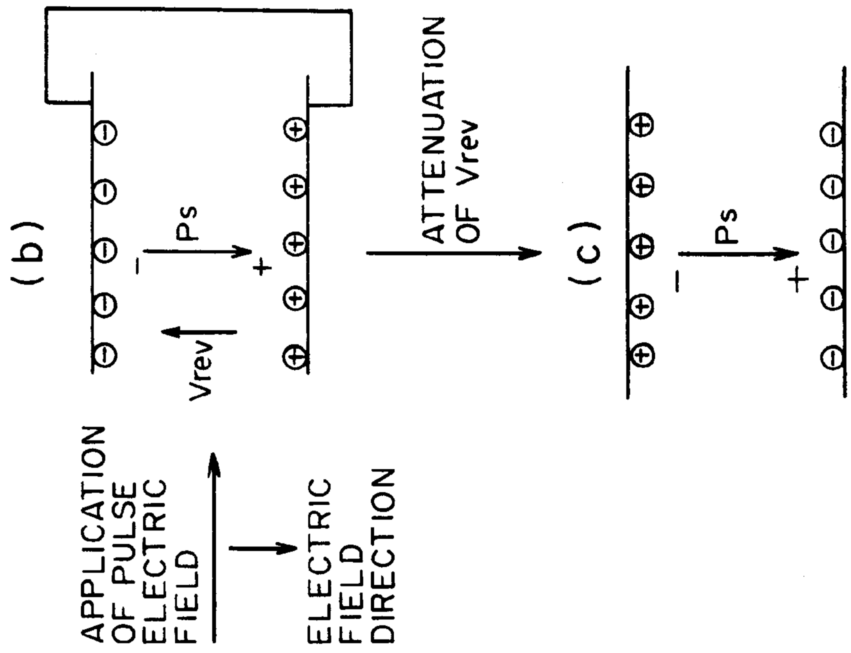


FIG. 6

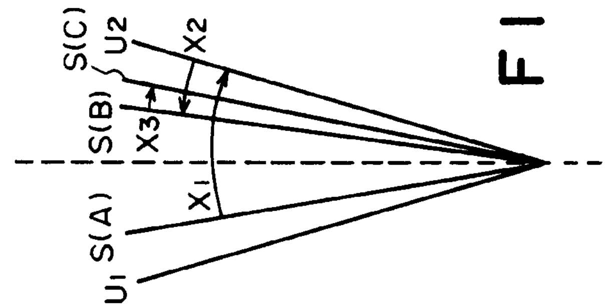


FIG. 7

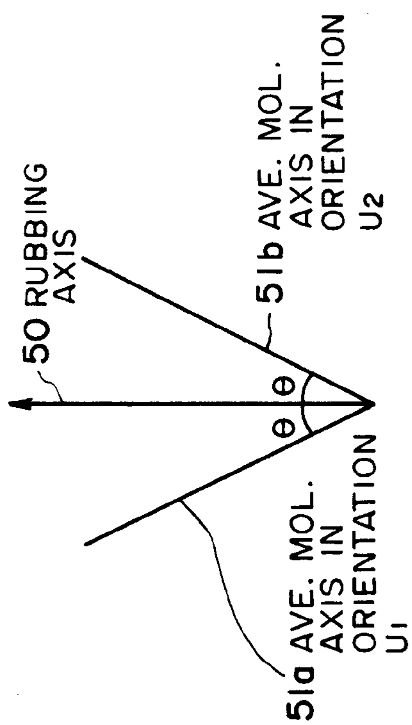


FIG. 5A

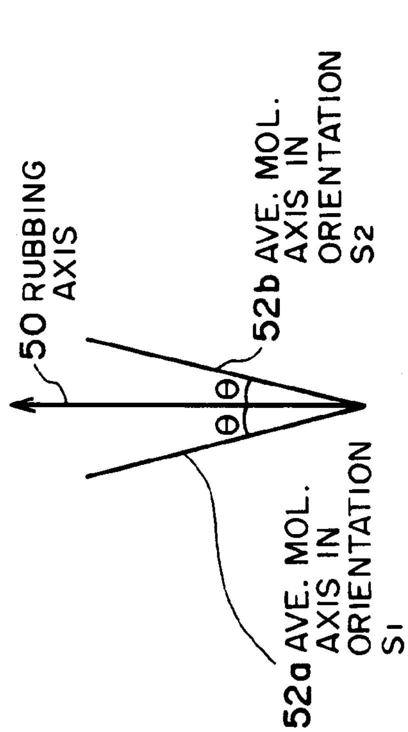


FIG. 5B

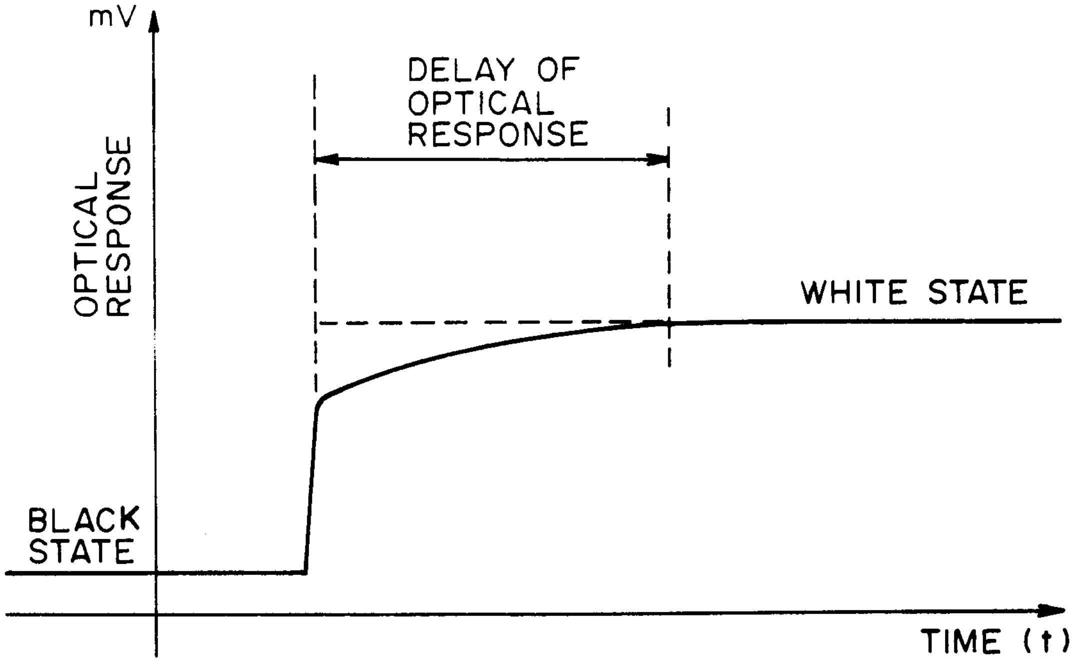
mV
OPTICAL RESPONSE
DELAY OF OPTICAL RESPONSE
WHITE STATE
BLACK STATE
TIME (t)

FIG. 8

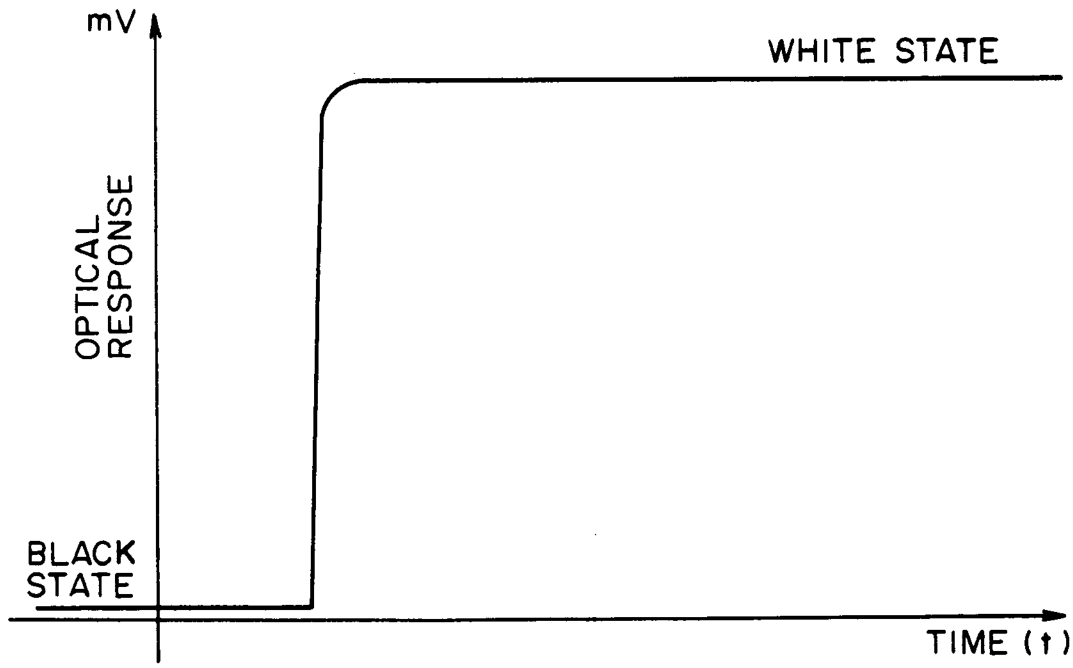
mV
WHITE STATE
OPTICAL RESPONSE
BLACK STATE
TIME (t)

FIG. 9

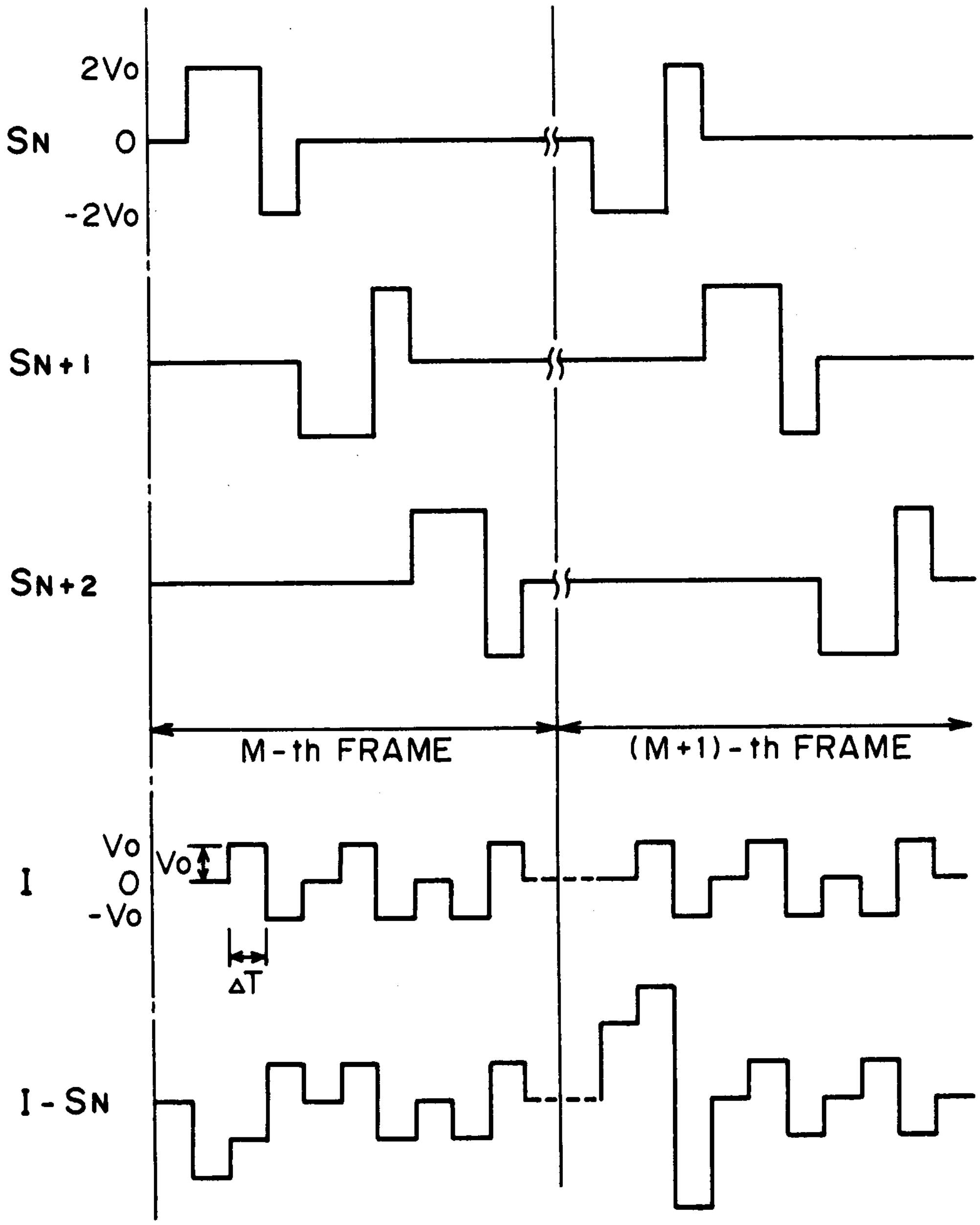


FIG. 10